(19) Europäisches Patentamt
European Patent Office
Office européen des brevets

(11) EP 1 553 143 B1

(12) **EUROPEAN PATENT SPECIFICATION**

(45) Date of publication and mention of the grant of the patent:
**02.05.2007 Bulletin 2007/18**

(21) Application number: **03761810.5**

(22) Date of filing: **26.06.2003**

(51) Int Cl.:
***C08L 79/04*** *(2006.01)* ***C08J 5/18*** *(2006.01)*
***D01F 6/74*** *(2006.01)*

(86) International application number:
**PCT/JP2003/008067**

(87) International publication number:
**WO 2004/003080 (08.01.2004 Gazette 2004/02)**

(54) **HIGHLY DURABLE POLYBENZAZOLE COMPOSITION, FIBER AND FILM**

HOCH DAUERHAFTE POLYBENZAZOLZUSAMMENSETZUNG, -FASER UND FOLIE

COMPOSITION, FIBRE ET FILM DE POLYBENZAZOLE PRESENTANT UNE LONGUE DUREE DE VIE

(84) Designated Contracting States:
**AT BE BG CH CY CZ DE DK EE ES FI FR GB GR HU IE IT LI LU MC NL PT RO SE SI SK TR**

(30) Priority:
**26.06.2002 JP 2002186419**
**20.08.2002 JP 2002239699**
**09.09.2002 JP 2002263185**
**09.09.2002 JP 2002263186**
**09.09.2002 JP 2002263184**
**22.10.2002 JP 2002307543**
**30.10.2002 JP 2002316298**
**30.10.2002 JP 2002316297**
**31.10.2002 JP 2002318266**
**31.10.2002 JP 2002318267**
**31.10.2002 JP 2002318265**
**01.11.2002 JP 2002319830**

(43) Date of publication of application:
**13.07.2005 Bulletin 2005/28**

(73) Proprietor: **Toyo Boseki Kabushiki Kaisha**
**Osaka-shi,**
**Osaka 530-8230 (JP)**

(72) Inventors:
- **ABE, Yukihiro,**
**c/o Toyo Boseki Kabushiki Kaisha**
**Otsu-shi,**
**Shiga 520-0243 (JP)**
- **MATSUOKA, Go,**
**c/o Toyo Boseki Kabushiki Kaisha**
**Otsu-shi,**
**Shiga 520-0243 (JP)**
- **KIRIYAMA, Kohei,**
**c/o Toyo Boseki Kabushiki Kaisha**
**Otsu-shi,**
**Shiga 520-0243 (JP)**
- **MURASE, Hiroki,**
**c/o Toyo Boseki Kabushiki Kaisha**
**Otsu-shi,**
**Shiga 520-0243 (JP)**
- **NAKAMURA, Muneatsu,**
**Toyo Boseki Kabushiki Kaisha**
**Otsu-shi,**
**Shiga 520-0243 (JP)**
- **NOMURA, Yukihiro,**
**Toyo Boseki Kabushiki Kaisha**
**Otsu-shi,**
**Shiga 520-0243 (JP)**
- **EGUCHI, Hironori,**
**Toyo Boseki Kabushiki Kaisha**
**Osaka-shi,**
**Osaka 530-8230 (JP)**
- **OKUYAMA, Yukinari,**
**Toyo Boseki Kabushiki Kaisha**
**Osaka-shi,**
**Osaka 530-8230 (JP)**
- **KUROKI, Tadao,**
**c/o Toyo Boseki Kabushiki Kaisha**
**Osaka shi,**
**Osaka 530-8230 (JP)**
- **ICHIRYU, Takaharu,**
**c/o Toyo Boseki K. K.**
**Osaka-shi,**
**Osaka 530-8230 (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 553 143 B1

(74) Representative: **Godemeyer, Thomas**
**polypatent**
**An den Gärten 7**
**51491 Overath (DE)**

(56) References cited:
**EP-A- 1 029 957**
**EP-A2- 0 743 657**
**JP-A- 8 060 437**
**JP-A- 9 157 948**
**JP-A- 11 228 820**
**JP-A- 2003 213 127**
**US-A- 5 772 942**

## Description

### FILED OF THE INVENTION

The present invention relates to a highly durable polybenzazole composition containing a stabilizing agent for imparting excellent storage stability to polybenzazole, and fibers and films made of the polybenzazole composition, and the use thereof.

### BACKGROUND OF THE INVENTION

As high heat resistant and high strength fibers, there are known fibers made of polybenzoxazole (PBO), polybenzimidazole (PBI) or polybenzothiazole (PBT) (hereinafter referred to as polybenzazole).

Generally, polybenzazole fibers are manufactured by spinning a dope of a liquid crystalline polymer in a mineral acid as a solvent. The polymer dope is extruded through a spinneret, and the resultant filaments are washed with water so as to extract the mineral acid into the bath containing water. In this washing step, the filaments are thoroughly washed with water, and allowed to pass through a bath containing an aqueous solution of an inorganic basic compound such as sodium hydroxide or the like to thereby neutralize the remaining mineral acid which has not been extracted from the filaments. After that, the filaments are again washed. It is very important to impregnate the filaments with the basic compound until the internal conditions of the filaments are neutralized. When the conditions of water washing and the amount of the inorganic basic compound to be added change for some reasons, the internal conditions of the filaments become acidic or basic.

If the mineral acid remains in the polybenzazole filaments which are insufficiently neutralized, such polybenzazole filaments tend to degrade in tensile strength, when exposed to an atmosphere of high temperature and high humidity over a long period of time.

Under these circumstances, there are demands for polybenzazole fibers and films which show less decrease in strength when exposed to atmospheres of high temperatures and high humidity over long periods of time, even though the polybenzazole fibers and films contain mineral acids which are insufficiently neutralized for some reason to remain in the fibers and films. An object of the present invention is therefore to provide polybenzazole which shows less decrease in strength.

### BRIEF DESCRIPTION OF THE DRAWINGS

Fig. 1 shows a schematic diagram of an apparatus for measuring the X-ray diffraction of a filament under a tension.
Fig. 2 shows a graph for evaluating the half width factors (Hws).
Fig. 3 shows a graph for indicating changes of molecular orientation ($<\sin^2\phi>$).
Fig. 4 shows a schematic diagram of a high temperature abrasion tester used for the measurement of abrasion resistance.
Fig. 5 shows a schematic diagram of a cheese dyeing apparatus.

In the drawings, numeral 1 refers to an abrading material; 2, to a heater; 3, to a weight; 4, to a motor; 5, to a sample holder; 6, to a sample; 7, to a treating bath; 8, to a treatment liquid; 9, to a non-dried waywound yarn; 10, to a water permeable porous bobbin; 11, to the cap of the bobbin; and 12, to a treatment liquid-circulating pump.

### DISCLOSURE OF THE INVENTION

The present inventors have intensively researched in order to solve the foregoing problems, and finally accomplished the present invention.

That is, the present invention provides the following.

1. A polybenzazole composition containing a basic substance.
2. A polybenzazole composition according to the above paragraph 1, in which the basic substance is an organic compound.
3. A polybenzazole composition according to the above paragraph 1, in which the basic substance is an organic compound soluble in water or a hydrophilic solvent.
4. A polybenzazole composition according to the above paragraph 1, in which the basic substance is selected from the group consisting of guanidines, triazoles, quinazolines, piperidines, anilines, pyridines and cyanuric acids.

5. A polybenzazole fiber comprising a polybenzazole composition according to the above paragraph 1.
6. A polybenzazole film comprising a polybenzazole composition according to the above paragraph 1.
7. A polybenzazole fiber according to the above paragraph 5, which contains a basic organic compound in the form of a monomer or a condensate.
8. A polybenzazole fiber according to the above paragraph 5, which contains a basic organic compound selected from the group consisting of p-phenylenediamine, m-phenylenediamine and a mixture thereof, in the form of a monomer or a condensate.
9. A polybenzazole fiber according to the above paragraph 5, in which the X-ray meridian diffraction half-width factor is 0.3°/GPa or less.
10. A polybenzazole fiber according to the above paragraph 5, in which the elasticity decrement Er attributed to change of molecular orientation is 30 GPa or less.
11. A polybenzazole fiber according to the above paragraph 5, in which the breaking strength of the fiber is 1 GPa or more.
12. A polybenzazole fiber according to the above paragraph 5, which is a staple fiber.
13. A polybenzazole spun yarn comprising a polybenzazole fiber according to the above paragraph 5.
14. A polybenzazole woven or knitted fabric comprising a polybenzazole fiber according to the above paragraph 5.
15. A polybenzazole felt material comprising a polybenzazole fiber according to the above paragraph 5.
16. A polybenzazole composite material comprising a polybenzazole fiber according to the above paragraph 5.
17. A polybenzazole cord comprising a polybenzazole fiber according to the above paragraph 5.
18. A polybenzazole rod comprising a polybenzazole fiber according to the above paragraph 5.
19. A polybenzazole fibrous sheet for reinforcing cement and concrete, said sheet comprising a polybenzazole fiber according to the above paragraph 5.
20. A polybenzazole fibrous sheet for reinforcing cement and concrete, according to the above paragraph 19, in which the breaking strength of said sheet is 50 kg/cm or more.
21. A high strength fiber comprising a polybenzazole fiber according to the above paragraph 5.
22. A knife proof vest comprising a polybenzazole fiber according to the above paragraph 5.
23. A bullet proof vest comprising a polybenzazole fiber according to the above paragraph 5.

Hereinafter, the present invention will be described in more detail.

Examples of the guanidiens to be used in the present invention include aminoguanidine bicarbonate, 1,3-bis (2-benzothiazolyl)guanidine, 1,3-diphenylguanidine, 1,3-di(o-toluyl)guanidine, 1,2,3-triphenylguanidine and the like. Examples of the triazoles include 2-(2-hydroxy-5-methylphenyl)benzotriazole, 3-amino-1,2,4-triazole, 2-[2-hydroxy-3-(3,4,5,6-tetrahydrophthalimide-methyl)-5-methylphenyl]benzotriazole, 2-(3,5-di-tert.-butyl-2-hydroxyphenyl)benzotriazole and the like. Examples of the quinazolines include quinazoline-2,4-dione and the like. Examples of the piperidines include piperadine and the like. Examples of the anilines include anililne, o-hydroxyanyline, o-phenoxyaniline, p-hydroxyaniline and the like. Examples of the pyridines include pyridine and the like. Examples of the cyanuric acid include isocyanuric acid and the like.

Each of these basic organic compounds may be used alone or in combination. The amount of the basic organic compound to be added is 0.01 to 20%, preferably 0.1 to 10%.

The basic organic compounds to be used in the present invention are not limited to the above compounds.

The polybenzazole (PBZ) referred to in the present invention is at least one polymer selected from the group consisting of polybenzoxazole (PBO), polybenzothiazole (PBT) and polybenzimidazole (PBI). In the present invention, PBO is a polymer containing an oxazole ring bonded to an aromatic group which is not necessarily a benzene ring. Examples of PBO include a wide range of polymers each of which comprises a unit of a plurality of oxazole rings bonded to poly(phenylenebenzobisoxazole) and aromatic groups. Similarly, PBT and PBI have analogous structures as above. Examples of the polybenzazole further include mixtures, and copolymers or block polymers of two or more polybenzazole polymers, such as mixtures of PBO and PBT and/or PBI, and block or random copolymers of PBO, PBT and PBI. Preferably, the polybenzazole is a lyotropic liquid crystal polymer which forms a liquid crystal in a mineral acid at a specified concentration, and polybenzoxazole is preferred in the present invention.

Preferably, the structural unit contained in a PBZ polymer is selected from lyotropic liquid crystal polymers. The monomer unit contained in the polymer is selected from the monomer units represented by the following formulas (a) to (i):

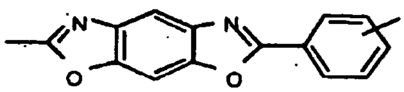 (a)

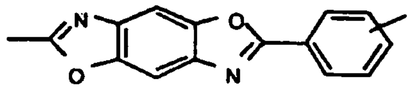

(b)

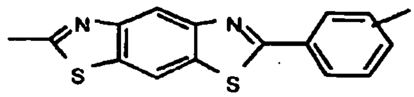

(c)

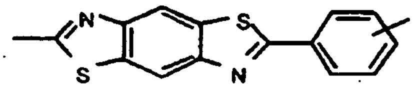

(d)

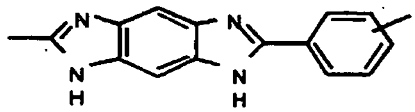

(e)

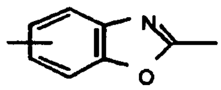

(f)

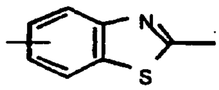

(g)

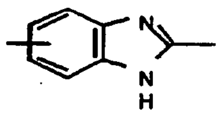

(h)

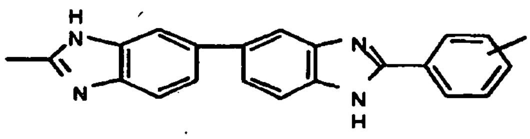

(i)

A solution of a polybenzazole polymer (hereinafter referred to as a polymer dope) is readily prepared by polymerizing a polybenzazole polymer in an acidic solvent. The solvent to be used is preferably a mineral acid such as sulfuric acid, methanesulfonic acid or polyphosphoric acid, and the most preferable is polyphosphoric acid. The concentration of the polymer in the dope is 1 to 30%, preferably 1 to 20%.

In the present invention, suitable polymers or copolymers and dopes are prepared by any of known methods, described, for example, in U.S. Patent No. 4,533,693 by Wolfe et al. (August 6, 1985), U.S. Patent No. 4,772,678 by Sybert et al. (September 22, 1988), U.S. Patent No. 4,847,350 by Harris (July 11, 1989) and U.S. Patent No. 5,089,591 by Gregory et al. (February 18, 1992). To sum up, a suitable polymer or copolymer is reacted in a solution of a non-oxidizing and dehydrating acid, by raising the temperature stepwise or at a given rate within a range of about 60°C to about 230°, while stirring and shearing at high speeds under a non-oxidizing atmosphere.

The dope thus prepared is extruded throuogh a spinneret, and the extrusions are drawn long in an air to form filaments. Preferred methods therefor are described in the above patent literature and U.S. Patent No. 5,034,250. The

dope extrusions having passed through the spinneret enter a space between the spinneret and a washing bath. This space is generally called an air gap, but is not always charged with an air. It is needed to fill this space with a medium which does not act to remove the solvent and which is non-reactive with the dope, such as an air, nitrogen, argon, helium, carbon dioxide or the like.

The resultant filaments are washed to remove a part of the solvent so as to avoid excessive elongation thereof. The filaments are further washed and neutralized with a suitable inorganic basic substance such as sodium hydroxide or the like, and then further washed. Most of the solvent was removed by this step. The washing herein referred to means that the fibers or filaments are allowed to contact a liquid which is compatible with the mineral acid dissolving the polybenzazole polymer and which is not a solvent for the polybenzazole polymer, so as to remove the acid solvent from the dope. As a suitable washing liquid, water or a mixture of water and an acid solvent can be used. Preferably, the filaments are so washed that the concentration of the residual mineral acid can be 8,000 ppm or lower, more preferably 5,000 ppm or lower. After that, the filaments are dried, heat-treated and wound, as required.

To form a film, typically, a viscous polymer dope may be extruded onto a rotary drum to form an uniaxial oriented film, as described in U.S. Patent No. 4,487,735. This film is tube-like extruded and is blown on or pushed in a mandrel to thereby biaxially orient the film. Then, the film is dipped in water to be solidified. Thus, the solid film can be formed. The film may be further washed to remove the solvent.

The method of preparing a polybenzazole composition of the present invention, in other words, the method of containing the above basic substance in polybenzazole is not particularly limited. The basic substance may be contained in polybenzazole during the polymerization of polybenzazole, during the washing of the dope, before the drying of the filaments, or during the post-processing of the filaments. Preferably, to add the basic substance during the polymerization of polybenzazole, the basic substance is simultaneously added with the starting materials; the basic substance is added at an optional point of time during the reaction while the temperature is being increased stepwise or at a constant rate; or the basic substance is added after the completion of the polymerization. Preferably, to add the basic substance during the washing of the dope or before the drying of the filaments, the basic substance is dissolved in water or a hydrophilic organic solvent, and the dope, filaments or a film is dipped in the resultant solution. Preferably, to add the basic substance during the post-processing step at which the dope, the filaments or the film has had a solid structure, the basic substance is dissolved in a solvent, and a multifilament, staple fiber or fabric is dipped in the resultant solution, and then is washed with a suitable solvent to remove the solvent of the solution.

Such multifilament, staple or fabric can contain a sufficient amount of the basic substance when dipped in the solution for any number of seconds not shorter than 0.1 second, preferably not shorter than 10 seconds. Further, two or more basic substances may be simultaneously added thereto.

After washing with water, the multifilament, staple or fabric is dried usually at a temperature of 300°C or lower to thereby fix the basic substance therein. The tensile strength retention of the multifilament, staple or fabric after undergoing the heat treatment is 80% or more of the tensile strength of a polybenzazole molded form which contains no basic substance, and thus, it is known that the adverse influence of the heat treatment on the polymer is a little.

The chemical conditions or actions of the basic substance in the fibers have not been clearly known. However, the following are simply supposed: moisture in an atmosphere of high temperature and high humidity infiltrates the polybenzazole fibers or the film, so that the residual mineral acid is dissociated by the moisture to release protons, which are captured by the basic substance to maintain the reaction system in a neutral state, to thereby prevent a decrease in the strength of the fibers or the film. This idea, however, does not restrict the present invention in any way.

The following method is recommended for the manufacturing of the polybenzazole fibers.

The filaments resulting from the spinning are washed to remove a part of the solvent so as to avoid excessive elongation thereof. The filaments are further washed and neutralized with a suitable inorganic base such as sodium hydroxide, calcium hydroxide, potassium hydroxide or the like to thereby remove most of the solvent. The washing herein referred to means that the fibers or filaments are allowed to contact a liquid which is compatible with the mineral acid dissolving the polybenzazole polymer and which is not a solvent for the polybenzazole polymer, so as to remove the acid solvent from the dope. As a suitable washing liquid, water or a mixture of water and an acid solvent can be used. Preferably, the filaments are so washed that the concentration of the residual mineral acid can be 8,000 ppm or lower, more preferably 5,000 ppm or lower. Desirably, the stoichiometric ratio of the residual inorganic base to the residual mineral acid in the filament is 0.9 to 1.6 : 1. After that, the filaments are dried, heat-treated and wound, as required.

Firstly, the polybenzazole fibers of the present invention are characterized in that the fibers contain a basic organic compound in the form of a monomer or a condensate, so that the fibers can have a tensile strength retention of 85% or more after exposed to an atmosphere of a temperature of 80°C and a relative humidity of 80% for 700 hours. The basic organic compound herein referred to is not particularly limited, and it may be any of organic compounds that show basic states, such as aromatic amine.

It is preferable to contain the basic organic compound in the fibers or filaments without allowing the fibers or filaments to have a moisture regain of 20% or less. If the fibers or filaments once have a moisture regain of 20% or less, the pores of the surfaces of the fibers or filaments become narrower, so that the surfaces of the fibers or filaments

become dense. As a result, it becomes hard for the basic organic compound to infiltrate the fibers or filaments. As specific methods, there are given the guide oiling method, the showering method, the dipping method or the like is employed to contain the basic organic compound in the fibers or filaments between the step of extruding the dope through the spinneret and the step of drying the fibers or filaments. Otherwise, the filaments are wound without drying, and dipped in a solution of the basic organic compound to thereby contain the compound in the fibers or filaments. In order for the fibers or filaments to maintain a high strength retention after exposed to an atmosphere of high temperature and high humidity over a long period of time, preferably, the fibers or filaments are wound up without drying, and dipped in a solution of the basic organic compound for a relatively long time.

Secondly, the polybenzazole fibers of the present invention are characterized in that the fibers contain a basic organic compound selected from p-pheanylenediamine, m-phenylenediamine and a mixture thereof, in the form of a monomer or a condensate. By doing so, the fibers can have a tensile strength retention of 85% or more, preferably 90% or more after exposed to an atmosphere of a temperature of 80°C and a relative humidity of 80% for 700 hours. The use of other basic organic compounds is effective to prevent the fibers from having a decreased strength attributed to long term exposure to an atmosphere of high temperature and high humidity. Among such other basic organic compounds, phenylenediamine shows a marked effect. The amount of phenylenediamine to be added is 10% or less, preferably 8% or less, more preferably 2 to 6%. When it exceeds 10%, the fineness of the filaments increases due to the increased amount of phenylenediamine, which undesirably leads to a decrease in the initial strength of the filaments.

Also, in this case, phenylenediamine is so contained in the fibers that the fibers never have a moisture regain of 20% or less, as well as the foregoing basic organic compounds. If the fibers once have a moisture regain of 20% or less, the pores of the surfaces of the fibers become narrower to dense the surfaces of the fibers. As a result, it becomes hard for phenylenediamine to infiltrate the fibers. As specific methods, there are given the guide oiling method, the showering method, the dipping method or the like is employed to contain phenylenediamine in the filaments between the step of extruding the dope through the spinneret and the step of drying the filaments. Otherwise, the fibers or filaments are wound without drying, and dipped in an aqueous solution of phenylenediamine to thereby contain the compound in the filaments. In order for the filaments to maintain a high strength retention after exposed to an atmosphere of high temperature and high humidity for a long period of time, preferably, the filaments are wound up without drying, and dipped in an aqueous solution of phenylenediamine for a relatively long time. More preferably, the filaments are treated by the cheese dyeing method for relatively long time to thereby sufficiently infiltrate phenylenediamine into the filaments.

The blending ratio of p-phenylenediamine to m-phenylenediamine is 4 : 6 to 0 : 10: namely, it is preferable that the amount of m-phenylenediamine is larger than that of p-phenylenediamine.

The oxidative condensation of p-phenylenediamine rapidly proceeds in water, and the condensation degree thereof quickly increases in water, as compared with m-phenylenediamine. Therefore, it is hard for the phenylenediamine condensate to enter the voids of the filaments. Consequently, it becomes difficult for the phenylenediamine condensate to sufficiently fill the voids of the filaments and thereby stabilize them. As a result, it is sometimes difficult for the filaments to have a tensile strength retention of 85% or more after exposed to an atmosphere of a temperature of 80°C and a relative humidity of 80% for 700 hours. It becomes possible to stably fill the voids of the filaments with the phenylenediamine condensate, by blending a larger amount of m-phenylenediamine than that of p-phenylenediamine, taken into consideration the slow oxidative condensation of m-phenylenediamine. However, the use of m-phenylenediamine alone makes it hard to accelerate the oxidative condensation, and requires very long time to treat the filaments, which results in poor productivity. To facilitate the oxidative condensation, the filaments may be treated at a higher temperature, but the strength of the fibers or filaments tends to lower during the treatment.

Therefore, more preferably, the blending ratio of p-phenylenediamine to m-phenylenediamine is 3 : 7 to 1 : 9.

Thirdly, the polybenzazole fibers of the present invention are characterized in that the X-ray meridian diffraction half-width factor thereof is 0.3°/CPa or less, and that the elasticity decrement Er attributed to change of molecular orientation is 30 GPa or less. The polybenzazole fibers unavoidably have voids therein, since the solvent is removed from the dope as mentioned above. Therefore, the fibers have defective structures attributed to such voids. Accordingly, stresses concentrate on such defective portions of the fibers until the fibers break. As a result, the fibers break without sufficiently exhibiting their own performance.

The breaking of the fibers or filaments is described in detail. When the fibers have voids therein, the voids themselves serve as deforming sites together with the deformation of the fibers. These voids therefore facilitate the deformation of the fibers in the direction of rotation of the crystals or in a shearing direction. When this deformation exceeds a certain limit, the fibers break. This time, the present inventors have intensively researched a method of solving this problem. As a result, they have found out that the basic organic compound, which is selected from p-phenylenediamine, m-phenylenediamine and a mixture thereof in the form of a monomer or a condensate and which is contained in the fibers, fills the voids of the fibers or filaments to thereby reinforce the same and to thereby decrease the defects of the structures of the same. As a results of the inventors' intensive researches, it is known that this effect can be expressed as an X-ray meridian diffraction half-width factor or an elasticity decrement Er attributed to change of molecular orientation.

While the chemical actions of the basic organic compound in the fibers are not clearly known, the following can be simply supposed. Since the micro voids in the polybenzazole fibers are filled with the monomer or condensate of the basic organic compound, external water vapor is hard to reach the PBZ molecules even while the polybenzazole fibers are exposed to an atmosphere of high temperature and high humidity over a long period of time. As a result, the strength of the fibers is hard to decrease; or, the mineral acid or the condensate thereof remaining in the polybenzazole fibers is dissociated by moisture to release hydrogen ions, which are then captured by the basic substance, so that the reaction system is neutralized to thereby inhibit the decrease of the strength of the fibers; or otherwise, the condensate of the basic organic compound having a developed conjugate system captures radicals which occur in the fibers for some reason, to thereby stabilize the reaction system and inhibit the decrease in the strength of the fibers. However, these ideas do not restrict the present invention in any way.

The polybenzazole fibers thus obtained can have so high durability as a tensile strength retention of 85% or more, preferably 90% even after exposed to an atmosphere of a temperature of as high as 80°C and a relative humidity of as high as 80% for 700 hours.

The breaking strength of the resultant fibers is so high as 1 GPa or more, preferably 2.75 GPa or more, still more preferably 4.10 GPa or more.

The staple fibers of the present invention are manufactured as follows. If needed, the filaments are crimped with a push-on crimper or the like. Then, the filaments are cut into staple fibers with predetermined lengths, using a known means, for example, a rotary cutter having a plurality of blades which are disposed radially in a slit between a pair of rotors opposing to each other. The length of the staple fibers is not particularly limited, and it is preferably 100 to 0.05 mm, more preferably 70 to 0.5 mm.

The polybenzazole staple fibers can be widely used. The staple fibers are variously processed to provide spun yarns, felt, etc. Such spun yarns and felt are used for tension materials such as cables and ropes; incision protective members such as gloves; heat resistant and fire resistant materials such as fireman uniforms, heat resistant felt, gaskets for plants, heat resistant fabrics, a variety of sealing materials, heat resistant cushions and filters; abrasion resistant materials such as continuous vehicle transmission belt and clutch facing; reinforcements for construction materials; rider suits; speaker cones; and the like. The applications of the staple fibers are not limited to those.

Spun yarns comprising the polybenzazole fibers of the present invention provide textile materials for protective materials, protective clothing and industrial materials.

Examples of the spun yarns of the present invention also include composite spun yarns which comprise the polybenzazole fibers with other fibers. As other fibers, there are given natural fibers, organic fibers, metal fibers, inorganic fibers and mineral fibers. There is no particular limit in selection of the blending method, and the conventional mixed staple fiber at opening process, and core-in sheath method can be employed.

Woven or knitted fabrics comprising the polybenzazole fibers of the present invention provide textile materials for highly durable protective materials, protective clothing and industrial materials.

Examples of the woven or knitted fabrics of the present invention also include composite woven or knitted fabrics combined with other fibers such as natural fibers, organic fibers, metal fibers, inorganic fibers, mineral fibers or the like. The method of combination is not limited. The woven fabrics include union woven fabrics, double weave fabrics, lip stop fabrics, etc. The knitted fabrics include union knitted fabrics, double knit fabrics, circular knitted fabrics, weft knitted fabrics, warp knitted fabrics, raschel knitted fabrics, etc. Fiber or filament fluxes composing the woven or knitted fabrics are not particularly limited. Monofilaments, multifilaments, twist yarns, doubled twist yarns, covering yarns, spun yarns, stretch breaking spun yarns, core-in-sheath yarns and braids can be used.

Felt of the present invention is manufactured as follows. The polybenzazole filaments obtained as above are crimped and cut into polybenzazole staple fibers by any of known methods. The resulting staple fibers are further processed into felt materials by any of known methods.

As the felt-making method, a known non-woven fabric making method can be employed. A web is made of the staple fibers, and the web is formed into felt by the needle punching method, stitch bonding method or water punching method, or by a method using a binder. Otherwise, felt may be made of the polybenzazole filaments by the spun-bonding method.

The felt materials of the present invention can be made of blended staple fibers comprising the polybenzazole fibers and different fibers. It is effective to increase the blending percentage of the polybenzazole fibers, when the felt material is demanded to have higher heat resistance. The weight percentage of the polybenzazole fibers is preferably 50% or higher, more preferably 80% or higher. When it is lower than 50%, the excellent heat resistance and abrasion resistance of the polybenzazole fibers can not be fully exhibited. There is no particular limit in selection of the blending method, in so far as the felt comprises homogeneously blended fibers, or comprises a lamination having two or more felt layers which are made separately of different fibers to be blended with the polybenzazole fibers, and such felts are moldable.

The felt material thus obtained can sufficiently maintain the strength even after exposed to an atmosphere of high temperature and high humidity, since it comprises the polybenzazole fibers which show less decrease in strength

even after exposed to an atmosphere of high temperature and high humidity over a long period of time. As a result, the abrasion resistance of the felt material under an atmosphere of high humidity is improved, which makes it possible to improve the life of a heat resistant cushion material comprising the felt material.

The composite materials comprising the polybenzazole fibers of the present invention may be provided in any form such as unidirectionally reinforced materials, pseudocubic laminations or laminated fabrics. As the matrix resin, any of thermosetting resins such as epoxy resins and phenol resins, super engineering plastics such as PPS and PEEK, and general-purpose thermosetting resins such as polyethylene, polypropylene and polyamide can be used.

The cords comprising the polybenzazole fibers of the present invention are provided as single twist yarns or twist two-ply yarns which are made with a ring twisting machine, to thereby improve the fatigue resistance. The twist coefficient is sufficient to be 350 to 2,000.

The twist coefficient $K = Tw \times (Den/\rho)^{1/2}$

Tw : the number of twist [T/10 cm],
Den : total denier ρ : fiber density [g/cm$^3$]

To improve the adhesion to rubber, the surfaces of the polybenzazole fibers or filaments may be subjected to corona treatment or plasma treatment. Otherwise, a compound reactive with the surfaces of the polybenzazole fibers or filaments or the surface of the polybenzazole fibers or filaments treated with corona may be applied to such polybenzazole fibers or filaments. To further improve the adhesion to rubber, the polybenzazole fibers or filaments may be subjected to a dipping treatment. As the treating liquid, the following can be generally used:

(A) an aqueous dispersion of an epoxy resin,
(B) an aqueous dispersion of a blocked isocyanate,
(C) an aqueous dispersion of a rubber latex, and
(D) a liquid mixture of a resorcin.formaldehyde resin and a rubber latex (RFL).

Each of the treating liquids may be used alone or in combination, for one-stage or multiple-stage treatment comprising two or more steps. Other treating methods also may be employed.

The polybenzazole fiber rod for reinforcing cement and concrete, of the present invention, is generally provided by knitting the polybenzazole filaments as a braid, and setting hard the braid with a thermosetting resin such as an epoxy resin. The braid can have an optional diameter according to the size of the filaments to be used. In view of the ease of handling, the diameter of the braid is usually 1 to 20 mm. For example, when 16 strands each having a fineness of 3,000 denier, made of the polybenzazole fibers, is made into a braid (with a total fineness of 48,000 denier), the braid has a diameter of 2 mm. When a braid has a total fineness of 752,000 denier, the braid has a diameter of 8 mm. The diameter of the rod set hard with the resin varies depending on the amount of the resin applied, and it is generally about 25% larger than the diameter of the braid.

The polybenzazole fiber sheets for cement/concrete reinforcement of the present invention are 100 to 1,500 g/m$^2$ in weight, and the sheets comprise the polybenzazole fibers in at least one direction thereof. When the weight of the sheet is below 100 g/m$^2$, the sheet can not have a required strength, which leads to the need of laminating an increased number of such sheets, resulting in poor efficiency. When the weight exceeds 1,500 g/cm$^2$, the impregnation of the sheet with a resin as adhesive becomes poor, and the adhesion with cement and concrete becomes poor.

The fiber sheet specifically means a woven fabric, knitted fabric, non-woven fabric, net, net-like sheet in which the intersections of filaments are fixed with adhesive, lamination of films made of the fibers, or the like. The strength of the fiber sheet is at least 50 kg/cm, preferably at least 100 kg/cm. When the strength is below 50 kg/cm, the effect of reinforcing cement/concrete can not be obtained. Generally, cement/concrete is reinforced with the fiber sheet by simply winding the sheet around the cement/concrete, or by sticking the fiber sheet thereto. Otherwise, the fiber sheet under a proper tension is wound around a bridge pier and bonded thereto, or is bonded to the base of a bridge. The fiber sheet of the present invention can be applied by any of the above methods.

The high strength fiber ropes of the present invention are made of the polybenzazole fibers which are manufactured by the above process, and the breaking strength thereof is as high as 1 GPa or more, preferably 2.75 GPa or more, still more preferably 4.10 GPa or more. Ropes having a variety of structures can be manufactured from such fibers by any of the known methods. The resultant ropes have so excellent durability as a tensile strength retention of 75% or more, preferably 80% after exposed to atmospheres of high temperatures and high humidity over long periods of time.

The knife proof vests of the present invention are made of laminated woven fabrics of the polybenzazole fibers. The texture of the woven fabric may be any of plain weave, twill weave and other weaves for ordinary fabrics. Plain weave fabrics are preferred, since the textures thereof are hard to shift so that high knife proof performance can be realized. The fineness of the polybenzazole fibers of this invention is 600 dtex or less, preferably 300 dtex or less. Advantageously, such low fineness fibers make it possible to achieve high knife proof performance. It is also important

that the number of yarns of the woven fabric of this invention is 30 yarns/25 mm or more, preferably 50 yarns/25 mm or more. When the number of yarns is small, the yarns of the fabric tend to move so that sufficient knife proof performance can not be obtained. The weight of the fabric is 100 g/$m^2$ or more, preferably 150 g/$m^2$ or more, in which range, excellent knife proof performance can be exhibited. The fabric to be used in this invention may be partially or fully coated or impregnated with a resin. The knife proof vest of the present invention is made of a lamination of such fabrics, or may be made of a plurality of such fabrics integrally sewn with a high strength machine sewing yarn.

The bullet proof vests of the present invention are made of laminated fabrics of the polybenzazole fibers. The texture of the fabric may be any of plain weave, twill weave and other weaves for ordinary fabrics. Plain weave fabrics or twill weave fabrics are preferred, since the texture of the fabric hardly shift, which makes it possible to achieve high bullet proof performance. The fineness of the polybenzazole fibers of this invention is 1,110 dtex or lower, preferably 600 dtex or lower, and the use of the polybenzazole fibers with such a low fineness makes it easy to achieve high bullet proof performance. It is also important that the number of the yarns of the fabric of this invention should be 40 yarns/25 mm or less. The weight of the fabric is 200 g/$cm^2$ or less, preferably 150 g/$m^2$, in which range excellent bullet proof performance can be realized. The bullet proof vest of the present invention is made of a lamination of the above fabrics, or may be made of the above fabrics integrally sewn with a high strength machine sewing yarn.

BEST MODES FOR CARRYING OUT THE INVENTION

Hereinafter, the present invention will be explained in more detail by way of Examples, which, however, should not be construed as limiting the scope of the present invention in any way. Needless to say, modifications of Examples within a range adapted to the gist as described later are possible, and such modifications are also included in the scope of the present invention.

The measuring methods in relation to Examples are conducted as follows.

(Evaluation of Strength of Filament or Film under Atmosphere of High Temperature and High Humidity)

The strength of a filament or a film was evaluated by measuring the strength retentions of the filament or the film found before and after a storage test under an atmosphere of high temperature and high humidity. This storage test was conducted using Humidic Chamber 1G43M manufactured by Yamato Kagakusha. A filament or a film wound onto a paper bobbin with a diameter of 5 cm was set on the apparatus. The apparatus was continuously operated for 100 days under an atmosphere of a temperature of 80°C and a relative humidity of 80%.

(Strength Retention)

The strengths of a filament found before and after a storage test under an atmosphere of a high temperature and high humidity were measured with a tension tester (RTM250 manufactured by A & D) according to the procedure of JIS-L1013, and the tensile strength found after the storage test was divided by the initial tensile strength found before the storage test. The strength of a film was determined in the same manner as above, using a sample film with a length of 5 cm, width of 1 mm and thickness of 8.5 $\mu$m.

(Evaluation of Decrease in Strength under Atmosphere of High Temperature and High Humidity)

A decrease in the strength of a filament or a film under an atmosphere of high temperature and high humidity was evaluated as follows: the filament wound onto a resinous bobbin with a diameter of 10 cm as a sample was stored in a container constantly kept at high temperature and high humidity, and removed from the container and subjected to a tensile test at a room temperature. The decrease in the strength of the sample was evaluated based on the strength retention of the sample relative to the strength thereof found before the storage test under the atmosphere of high temperature and high humidity. In this regard, the storage test was carried out under an atmosphere of a temperature of 80°C and a relative humidity of 80% for 700 hours, using Humidic Chamber 1G43M manufactured by Yamato Kagakusha, which was perfectly shielded so as not to permit light to pass through the container.

The strength retention was determined by measuring the tensile strengths of the sample found before and after the storage test, dividing the tensile strength found after the storage test by the tensile strength found before the storage test, and multiplying the quotient by 100. The measurement of the tensile strengths was conducted using a tensile tester (AG-50KNG manufactured by SIMADZU CORPORATION), according to the procedure of JIS-L1013.

(Measurement of Concentration of Phosphorus or Sodium Remaining in Filament or Fiber)

The concentration of the residual phosphorous in a filament or a fiber as a sample was measured using pellets

obtained by solidifying the sample, with a fluorescent X-ray spectrometer (PW1404/DY685 manufactured by PHILIPS). The concentration of the residual sodium was measured by the neutron-activating analysis.

(Moisture Regain)

The moisture regain was calculated from the weight W0 g of a filament or fiber found before the drying and the weight W1 g of the same filament or fiber found after the drying, according to the following equation. The drying was carried out at a temperature of 200°C for one hour.

$$\text{Moisture regain (\%)} = (W0 - W1)/W1 \times 100$$

(Measurement of X-Ray Meridian Diffraction Half-Width Factor Hws)

A goniometer (Ru-200 X-ray generator, RAD-rA system, manufactured by RIGAKU) was mounted on an apparatus as shown in Fig. 1, which pulls a filament under a tension, and the stress dependency of the width of (0010) diffraction lines was determined. The apparatus was operated at an output of 40 kV X 100 mA to generate CuK $\alpha$-rays from a copper-rotating target.

The diffraction intensity was recorded on an imaging plate (FDL UR-V manufactured by Fuji Photo Film Co., Ltd.). The diffraction intensity recorded was read with a digital microluminography (PIXsysTEM manufactured by JEOL LTD.). To precisely evaluate the half width of the resultant peak profile, curve fitting was conducted by using a synthesis of a Gaissian function and a Lorents function. The results were plotted relative to the stresses applied to the filament. The spots of the data were linearly aligned, and the half width factor (Hws) was evaluated from the gradient of the alignment of the spots. Fig. 2 shows an example of the graph for evaluating Hws.

(Measurement of Factor for Change of Molecular Orientation)

The apparatus as shown in Fig. 1, which applied a tension to a filament, was mounted on a small angle X-ray scattering apparatus, and the broadening of a peak of (200) diffraction points in the azimuth angular direction was measured so as to measure the elasticity decrement Er attributed to change of molecular orientation. Fig. 3 shows an example of the graph showing the change of molecular orientation ($\langle \sin^2\phi \rangle$).

The change of molecular orientation ($\langle \sin^2\phi \rangle$) was calculated from the azimuth angle profile I ($\phi$) of the (200) diffraction intensity, according to the following equation. The origin of the azimuth angle was present on the meridian as $\phi$ = 0.

$$\langle \sin^2 \phi \rangle = \frac{\int_0^{\pi/2} I(\phi) \sin^3 \phi \, d\phi}{\int_0^{\pi/2} I(\phi) \sin \phi \, d\phi}$$

According to the theory (Polymer 21, p.1199, 1980) proposed by Northort, the strain ($\varepsilon$) of a whole of a filament can be expressed as a synthesis of the elongation ($\varepsilon c$) of crystals and contribution ($\varepsilon r$) of rotation:

$$\varepsilon = \varepsilon c + \varepsilon r$$

The elongation $\varepsilon c$ of crystals can be calculated from the elasticity Ec of the crystal and a stress $\sigma$, and the contribution $\varepsilon r$ of rotation can be calculated using the results (shown in Fig. 3) which were measured by using $\langle \sin^2\phi \rangle$ as the function of $\sigma$, so as to rewrite $\varepsilon$ as the following equation. Herein, $\phi 0$ is an orientation angle when the stress is zero; $\phi$ is an orientation angle when the stress is $\sigma$.

$$\varepsilon = \sigma/Ec + (<\cos\phi>/<\cos\phi 0> - 1)$$

The elasticity decrement Er attributed to change of molecular orientation is defined by the following equation. In this regard, the content of the parentheses of the second term on the right side indicates the gradient of the tangent line of ε when σ is zero (σ = 0).

$$Er = Ec - \left( \left. \frac{d\varepsilon}{d\sigma} \right|_{\sigma=0} \right)^{-1}.$$

(Method of Evaluating Abrasion Resistance of Felt Material made of Polybenzazole Fibers at High Temperature)

A sample was abraded with an abrasion tester as shown in Fig. 4, by bringing a rubbing material heated at 500°C into contact with the sample under a load of 300 g/cm$^2$, and rotating the sample at 300 rpm under this condition. Specifically, the sample was dipped in pure water for 10 seconds just before the abrasion test, and then abraded for 5 hours; and the sample was removed from the tester, again dipped in pure water for 10 seconds and again abraded for 5 hours. This operation was repeated until the sample had been abraded for total 20 hours. The abrasion resistance of the sample was evaluated based on a decrease in the weight of the sample found after the abrasion for 20 hours.

(Experiment Example)

Making of Film-like Polybenzazole

A solution (or a polymer dope) of polybenzazole in polyphosphoric acid was sandwiched between polytetrafluoroethylene sheets and pressed with a heat press at 175°C under a pressure of 150 kg/cm$^2$. After that, the resultant polymer dope sandwiched between the polytetrafluoroethylene sheets was stretched at 130°C in the longitudinal direction until the length of the polymer dope became 3 times larger and in the lateral direction until the width thereof became 3 times larger. After cooling, the polymer dope was striped from the polytetrafluoroethylene sheets, and washed with water until the concentration of the residual phosphorous reached 5,000 ppm or less.

Making of Polybenzazole Filaments

Spinning was carried out so as to obtain filaments with diameters of 11.5 μm and fineness of 1.5 denier. A polymer dope was extruded through a nozzle having 340 holes with diameters of 160 μm at a spinning temperature of 150°C, and the extruded filaments were pushed into a first washing bath which was so located as to cause the filaments to be converged at an appropriate position to form a multifilament. A quench chamber was located in an air gap between the nozzle and the first washing bath, so as to elongate the filaments at a more uniform temperature. The length of the air gap was 30 cm. The filaments were pushed out into an air at 60°C. The filament takeup rate was 200 m/min., and the filament elongation multiplying factor was 30. The filaments were washed with water until the concentration of the residual phosphoric acid in the polybenzazole filaments reached 5,000 ppm or less.

(Example 1)

A polymer dope of polyparaphenylenebenzobisoxazole (12 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of aminoguanidine bicarbonate (450 g) in water (10 L) at 50°C for 3 hours, and dried at 80°C for 4 hours. The resultant filament was subjected to a storage test under an atmosphere of high temperature and high humidity. The result is shown in Table 1.

(Example 2)

A polymer dope of polyparaphenylenebenzobisoxazole (12 wt.%) having an intrinsic viscosity of 27 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of 3-amino-1,2,4-triazole (500 g) in water (10 L) at 50°C for 6 hours, and dried at 80°C for 4 hours. The resultant filament was subjected to a storage test under an atmosphere of high temperature and high humidity. The result is shown in Table 1.

(Example 3)

A polymer dope of polyparaphenylenebenzobisoxazole (12 wt.%) having an intrinsic viscosity of 29 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of 1,3-diphenylguanidine (500 g) in acetone (10 L) at 50°C for 10 hours, and dried at 80°C for 4 hours. The resultant filament was subjected to a storage test under an atmosphere of high temperature and high humidity. The result is shown in Table 1.

(Example 4)

A polymer dope of polyparaphenylenebenzobisoxazole (12 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of 1,3-bis(2-benzothiazolyl)guanidine (500 g) in acetone (10 L) at 50°C for 9 hours, and dried at 80°C for 4 hours. The resultant filament was subjected to a storage test under an atmosphere of high temperature and high humidity. The result is shown in Table 1.

(Example 5)

A polymer dope of polyparaphenylenebenzobisoxazole (12 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of 2-(2-hydroxy-5-methylphenyl)benzotriazole (500 g) in acetone (10 L) at 50°C for 5 hours, and dried at 80°C for 4 hours. The resultant filament was subjected to a storage test under an atmosphere of high temperature and high humidity. The result is shown in Table 1.

(Example 6)

A polymer dope of polyparaphenylenebenzobisoxazole (12 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of quinazoline-2,4-dione (500 g) in acetone (10 L) at 50°C for 10 hours, and dried at 80°C for 4 hours. The resultant filament was subjected to a storage test under an atmosphere of high temperature and high humidity. The result is shown in Table 1.

(Example 7)

A polymer dope of polyparaphenylenebenzobisoxazole (12 wt.%) having an intrinsic viscosity of 29 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of pyrazine (500 g) in water (10 L) at 50°C for 10 hours, and dried at 80°C for 4 hours. The resultant filament was subjected to a storage test under an atmosphere of high temperature and high humidity. The result is shown in Table 1.

(Example 8)

A polymer dope of polyparaphenylenebenzobisoxazole (12 wt.%) having an intrinsic viscosity of 28 dL/g at 30°C, measured using a methansulfonic acid solution, in polyphosphoric acid containing 88% of phosphorus pentaoxide

was spun in the same manner as described above, and the resultant filament (1,500 m) was wound onto a bobbin. The wound filament was dipped in a bath holding a solution of isocyanuric acid (500 g) in DMF (10 L) at 50°C for 9 hours, and dried at 80°C for 4 hours. The resultant filament was subjected to a storage test under an atmosphere of high temperature and high humidity. The result is shown in Table 1.

(Example 9)

A polymer dope of polyparaphenylenebenzobisoxazole (14 wt.%) having an intrinsic viscosity of 30 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of aniline (500 g) in water (10 L) at 50°C for 20 hours, and dried at 80°C for 4 hours. The resultant filament was subjected to a storage test under an atmosphere of high temperature and high humidity. The result is shown in Table 1.

(Example 10)

A polymer dope of polyparaphenylenebenzobisoxazole (13 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament (1,500 m) was wound onto a bobbin. The wound filament was dipped in a bath holding a solution of pyridine (300 g) in water (10 L) at 50°C for 10 hours, and dried at 80°C for 4 hours. The resultant filament was subjected to a storage test under an atmosphere of high temperature and high humidity. The result is shown in Table 1.

(Comparative Example 1)

A polymer dope of polyparaphenylenebenzobisoxazole (14 wt.%) having an intrinsic viscosity of 28 dL/g at 30°C, measured using a methansulfonic acid solution, in polyphosphoric acid containing 88% of phosphorus pentaoxide was spun in the same manner as described above, and the resultant filament was washed with water and dried at 80°C for 4 hours. The resultant filament was subjected to a storage test under an atmosphere of high temperature and high humidity. The result is shown in Table 1.

<Table 1>

| | Tensile Strength Retention (%) |
|---|---|
| Example 1 | 85 |
| Example 2 | 84 |
| Example 3 | 82 |
| Example 4 | 80 |
| Example 5 | 84 |
| Example 6 | 85 |
| Example 7 | 85 |
| Example 8 | 84 |
| Example 9 | 82 |
| Example 10 | 80 |
| Comparative Example 1 | 45 |

(Example 11)

A polymer dope of polyparaphenylenebenzobisoxazole (12 wt.%) having an intrinsic viscosity of 25 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of aminoguanidine bicarbonate (100 g) in water (10 L) for 1 minute, washed with water and dried at 80°C for 4 hours. The resultant film was subjected to a storage test under an atmosphere of high temperature and high humidity. The result is shown in Table 2.

(Example 12)

A polymer dope of polyparaphenylenebenzobisoxazole (12 wt.%) having an intrinsic viscosity of 24 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of 3-amino-1,2,4-triazole (100 g) in water (10 L) for 1 minute, washed with water and dried at 80°C for 4 hours. The resultant film was subjected to a storage test under an atmosphere of high temperature and high humidity. The result is shown in Table 2.

(Example 13)

A polymer dope of polyparaphenylenebenzobisoxazole (12 wt.%) having an intrinsic viscosity of 25 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of isocyanuric acid (100 g) in DMF (10 L) for 1 minute, washed with water and dried at 80°C for 4 hours. The resultant film was subjected to a storage test under an atmosphere of high temperature and high humidity. The result is shown in Table 2.

(Example 14)

A polymer dope of polyparaphenylenebenzobisoxazole (14 wt.%) having an intrinsic viscosity of 25 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of pyrazine (100 g) in water (10 L) for 1 minute, washed with water and dried at 80°C for 4 hours. The resultant film was subjected to a storage test under an atmosphere of high temperature and high humidity. The result is shown in Table 2.

(Example 15)

A polymer dope of polyparaphenylenebenzobisoxazole (12 wt.%) having an intrinsic viscosity of 25 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of quinazoline-2,4-dione (100 g) in acetone (10 L) for 1 minute, washed with water and dried at 80°C for 4 hours. The resultant film was subjected to a storage test under an atmosphere of high temperature and high humidity. The result is shown in Table 2.

(Example 16)

A polymer dope of polyparaphenylenebenzobisoxazole (12 wt.%) having an intrinsic viscosity of 23 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of aniline (100 g) in water (10 L) for 1 minute, washed with water and dried at 80°C for 4 hours. The resultant film was subjected to a storage test under an atmosphere of high temperature and high humidity. The result is shown in Table 2.

(Example 17)

A polymer dope of polyparaphenylenebenzobisoxazole (14 wt.%) having an intrinsic viscosity of 26 dL/g at 30°C, measured using a methansulfonic acid solution, in polyphosphoric acid containing 88% of phosphorus pentaoxide was formed into a film-like matter in the same manner as described above, and the resultant film-like matter was dipped in a bath holding a solution of pyridine (100 g) in water (10 L) for 1 minute, washed with water and dried at 80°C for 4 hours. The resultant film was subjected to a storage test under an atmosphere of high temperature and high humidity. The result is shown in Table 2.

(Comparative Example 2)

A polymer dope of polyparaphenylenebenzobisoxazole (12 wt.%) having an intrinsic viscosity of 25 dL/g at 30°C, measured using a methansulfonic acid solution, in polyphosphoric acid containing 88% of phosphorus pentaoxide

was formed into a film-like matter in the same manner as described above, and the resultant film-like matter was washed with water and dried at 80°C for 4 hours. The resultant film was subjected to a storage test under an atmosphere of high temperature and high humidity. The result is shown in Table 2. <Table 2>

| | Tensile Strength Retention (%) |
|---|---|
| Example 11 | 63 |
| Example 12 | 70 |
| Example 13 | 68 |
| Example 14 | 66 |
| Example 15 | 73 |
| Example 16 | 64 |
| Example 17 | 67 |
| Comparative Example 2 | 42 |

As is apparent from Tables 1 and 2, the polybenzazole filaments and films impregnated with the basic organic compounds have high strength retensions under the atmosphere of high temperatures and high humidity.

(Example 18)

A polymer dope of polyparaphenylenebenzobisoxazole (14 wt.%) having an intrinsic viscosity of 30 dL/g at 30°C, measured using a methansulfonic acid solution, in polyphosphoric acid containing 84.3% of phosphorus pentaoxide was extruded through a nozzle having 166 holes with diameters of 0.18 mm at 175°C to form filaments, and the resultant filaments were then dipped in a first washing bath which was so located that the filaments could be converged at an appropriate position into a multifilament, and solidified. A quench chamber was provided in an air gap between the nozzle and the first washing bath, so as to elongate the filaments at a more uniform temperature. The quenching temperature was 60°C. After that, the polybenzazole filaments were washed with water until the concentration of the residual phosphorus in the filaments reached 5,000 ppm or less, and were wound onto a paper cylinder without drying them. The takeup rate was 200 m/min.,; the spinning elongation multiplying factor was 40; and the wound filament was 1,500 m. The filament thus wound had a fineness of 1.5 dpf (denier/filament) as a monofilament, a diameter of 11.5 $\mu$m and a moisture regain of 50%.

The wound filament was neutralized with a 1% aqueous NaOH solution for 10 seconds, and washed with water for 30 seconds, and again wound onto a resinous bobbin without drying the same. The wound filament had a moisture regain of 50%. The wound filament was dipped in a bath holding a solution of aminoguanidine hydrogen carbonate (30 g) in water (12 L) at an ordinary temperature (20°C) for 3 hours, and then removed from the bath and dried at 80°C for 4 hours. The concentrations of the residual phosphorous and sodium in the resultant filament were measured. As a result, the concentration of phosphorus was 3,800 ppm, and that of sodium, 2,300 ppm. The molar ratio of Na/P was 0.82. The filament had a strength retention of 86% after the storage test under an atmosphere of high temperature and high humidity.

(Example 19)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and again wound onto a resinous bobbin without drying the same. The wound filament had a moisture regain of 50%. The wound filament was dipped in a bath holding a solution of 3-amino-1,2,4-triazole (30 g) in water (12 L) at an ordinary temperature (20°C) for 3 hours, and then removed from the bath and dried at 80°C for 4 hours. The concentrations of the residual phosphorous and sodium in the resultant filament were measured. As a result, the concentration of phosphorus was 3,600 ppm, and that of sodium, 2,000 ppm. The molar ratio of Na/P was 0.75. The filament had a strength retention of 87% after the storage test under an atmosphere of high temperature and high humidity.

(Example 20)

The procedure up to the step of washing a polybenzazole filament with water until the concentration of the residual phosphorus reached 5,000 ppm or less and winding the same onto a paper cylinder without drying was repeated

in the same manner as in Example 18.

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (2.8 g) and p-phenylenediamine (1.2 g) in water (12 L) was poured into an apparatus shown in Fig. 4, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

(Example 21)

The procedure up to the step of washing a polybenzazole filament with water until the concentration of the residual phosphorus reached 5,000 ppm or less and winding the same onto a paper cylinder without drying was repeated in the same manner as in Example 18

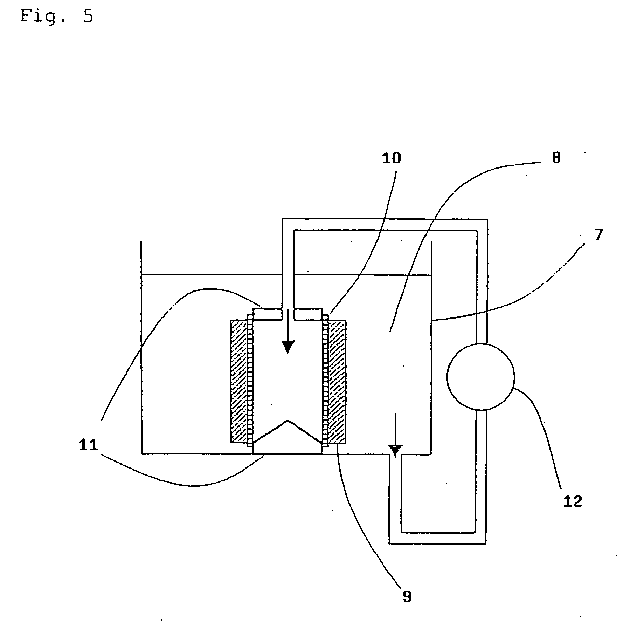

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 48 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,200 ppm, and that of sodium, 290 ppm. The molar ratio of Na/P was 0.33. The filament had a strength retention of 92% after the storage test under an atmosphere of high temperature and high humidity.

(Example 22)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (4 g) in water (12 L) was poured into an apparatus shown in Fig. 5, and the wound filament was put in the solution, which was then circulated at an ordinary temperature (20°C) for 48 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,400 ppm, and that of sodium, 280 ppm. The molar ratio of Na/P was 0.27. The filament had a strength retention of 95% after the storage test under an atmosphere of high temperature and high humidity.

(Example 23)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (3.2 g) and p-phenylenediamine (0.8 g) in water (12 L) was poured into an apparatus shown in Fig. 5, and the wound filament was put in the solution, which was then circulated at an ordinary temperature (20°C) for 48 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,200 ppm, and that of sodium, 360 ppm. The molar ratio of Na/P was 0.40. The

filament had a strength retention of 93% after the storage test under an atmosphere of high temperature and high humidity.

(Example 24)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with an aqueous NaOH solution with a ratio of 0.01 mol/L, and the aqueous NaOH solution was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,400 ppm, and that of sodium, 130 ppm. The molar ratio of Na/P was 1.25. The filament had a strength retention of 93% after the storage test under an atmosphere of high temperature and high humidity.

(Example 25)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and again wound onto a porous resinous bobbin without drying the same. The wound filament had a moisture regain of 50%. A solution of m-phenylenediamine (2.8 g) and p-phenylenediamine (1.2 g) in water (12 L) was poured into an apparatus shown in Fig. 5, and the wound filament was put in the solution, which was then circulated at 80°C for 8 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 900 ppm, and that of sodium, 200 ppm. The molar ratio of Na/P was 0.30. The filament had a strength retention of 92% after the storage test under an atmosphere of high temperature and high humidity.

(Example 26)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was again wound onto a porous resinous bobbin without drying the same. The wound filament had a moisture regain of 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,700 ppm, and that of sodium, 0 ppm. The molar ratio of Na/P was 0. The filament had a strength retention of 89% after the storage test under an atmosphere of high temperature and high humidity.

(Comparative Example 3)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and dried at 80°C for 4 hours. The concentrations of the residual phosphorous and sodium in the resultant

filament were measured. As a result, the concentration of phosphorus was 4,700 ppm, and that of sodium, 3,300 ppm. The molar ratio of Na/P was 0.95. The filament had a strength retention of 82% after the storage test under an atmosphere of high temperature and high humidity.

(Comparative Example 4)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds and washed with water for 30 seconds. The wound filament was then dried until the moisture regain thereof reached 10%, and again wound onto a resinous bobbin. The wound filament was dipped in a bath holding a solution of aminoguanidine hydrogen carbonate (30 g) in water (12 L) at an ordinary temperature (20°C) for 3 hours. Then, the wound filament was removed from the bath and dried at 80°C for 4 hours. The concentrations of the residual phosphorous and sodium in the resultant filament were measured. As a result, the concentration of phosphorus was 4,000 ppm, and that of sodium, 2,400 ppm. The molar ratio of Na/P was 0.81. The filament had a strength retention of 78% after the storage test under an atmosphere of high temperature and high humidity.

(Comparative Example 5)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds. The wound filament was then dried until the moisture regain reached 10% and wound onto a porous resinous bobbin. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 3,600 ppm, and that of sodium, 2,200 ppm. The molar ratio of Na/P was 0.82. The filament had a strength retention of 79% after the storage test under an atmosphere of high temperature and high humidity.

(Comparative Example 6)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and wound onto a porous resinous bobbin without drying the same. The wound filament had a moisture regain of 50%. The wound filament was allowed to contact a solution of m-phenylenediamine (2.8 g) and p-phenylenediamine (1.2 g) in water (12 L) for 60 seconds, and dried at 80°C for 4 hours. The concentrations of the residual phosphorous and sodium in the resultant filament were measured. As a result, the concentration of phosphorus was 4,400 ppm, and that of sodium, 3,200 ppm. The molar ratio of Na/P was 0.98. The filament had a strength retention of 81% after the storage test under an atmosphere of high temperature and high humidity.

(Comparative Example 7)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and wound onto a porous resinous bobbin without drying the same. The wound filament had a moisture regain of 50%. The wound filament was allowed to contact a solution of m-phenylenediamine (2.8 g) and p-phenylenediamine (1.2 g) in water (50 g) for 60 seconds, and dried at 80°C for 4 hours. The concentrations of the residual phosphorous and sodium in the resultant filament were measured. As a result, the concentration of phosphorus was 4,600 ppm, and that of sodium, 3,300 ppm. The molar ratio of Na/P was 0.97. The filament had a strength retention of

81% after the storage test under an atmosphere of high temperature and high humidity.

(Comparative Example 8)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of p-phenylenediamine (4 g) in water (12 L) was poured into an apparatus shown in Fig. 5, and the wound filament was put in the solution, which was then circulated at an ordinary temperature (20°C) for 48 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,400 ppm, and that of sodium, 320 ppm. The molar ratio of Na/P was 0.31. The filament had a strength retention of 83% after the storage test under an atmosphere of high temperature and high humidity.

(Comparative Example 9)

The procedure up to the step of washing a polybenzazole filament with water until the concentration of the residual phosphorus reached 5,000 ppm or less and winding the same onto a paper cylinder without drying was repeated in the same manner as in Example 18.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (1.2 g) and p-phenylenediamine (2.8 g) in water (12 L) was poured into an apparatus shown in Fig. 5, and the wound filament was put in the solution, which was then circulated at an ordinary temperature (20°C) for 48 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,200 ppm, and that of sodium, 240 ppm. The molar ratio of Na/P was 0.27. The filament had a strength retention of 84% after the storage test under an atmosphere of high temperature and high humidity.

The foregoing results are summarized in Table 3. As is apparent from Table 3, the polybenzazole filaments of Examples had very high strength retentions after exposed to the atmospheres of high temperatures and high humidity, as compared with the filaments of Comparative Examples.

<Table 3>

| | Conditions for washing, neutralization and washing | | | Concentration of P | Concentration of Na | Molar ratio of Na/P | Breaking strength | Strength retention | Hws | Er |
|---|---|---|---|---|---|---|---|---|---|---|
| | Neutralization | | Washing time after neutralization | | | | | | | |
| | NaOH concentration | Time | | | | | | | | |
| | | Sec. | Sec. | ppm | ppm | | GPa | % | °/GPa | Gpa |
| Ex.18 | 1% | 10 | 30 | 3800 | 2300 | 0.82 | 5.8 | 86 | 0.25 | 24 |
| Ex.19 | 1% | 10 | 30 | 3600 | 2000 | 0.75 | 5.8 | 87 | 0.27 | 22 |
| Ex.20 | 1% | 10 | 30 | 1900 | 760 | 0.54 | 5.8 | 90 | 0.18 | 21 |
| Ex.21 | 1% | 10 | 30 | 1200 | 290 | 0.33 | 5.7 | 92 | 0.13 | 17 |
| Ex.22 | 1% | 10 | 30 | 1400 | 280 | 0.27 | 5.7 | 95 | 0.20 | 21 |
| Ex.23 | 1% | 10 | 30 | 1200 | 360 | 0.40 | 5.7 | 93 | 0.22 | 24 |
| Ex.24 | 1% | 10 | 30 | 1400 | 1300 | 1.25 | 5.7 | 93 | 0.15 | 18 |
| Ex.25 | 1% | 10 | 30 | 900 | 200 | 0.30 | 5.3 | 92 | 0.20 | 24 |
| Ex.26 | - | 0 | 0 | 1700 | 0 | 0 | 5.5 | 89 | 0.19 | 20 |
| C.Ex.3 | 1% | 10 | 30 | 4700 | 3300 | 0.95 | 6.0 | 82 | 0.36 | 36 |
| C.Ex.4 | 1% | 10 | 30 | 4000 | 2400 | 0.81 | 5.8 | 78 | 0.37 | 40 |
| C.Ex.5 | 1% | 10 | 30 | 3600 | 2200 | 0.82 | 5.9 | 79 | 0.39 | 36 |
| C.Ex.6 | 1% | 10 | 30 | 4400 | 3200 | 0.98 | 5.9 | 81 | 0.35 | 37 |
| C.Ex.7 | 1% | 10 | 30 | 4600 | 3300 | 0.97 | 5.6 | 81 | 0.37 | 42 |
| C.Ex.8 | 1% | 10 | 30 | 1400 | 320 | 0.31 | 5.6 | 83 | 0.31 | 32 |
| C.Ex.9 | 1% | 10 | 30 | 1200 | 240 | 0.27 | 5.7 | 84 | 0.32 | 34 |

<Table 3 Continued>

| | Treating conditions | | | | | |
|---|---|---|---|---|---|---|
| | Reagent | Ratio | Time | Temp. °C | Moisture regain before treatment | Concen-tration of treating liquid |
| Ex.18 | Aminoguanidine hydrogen carbonate | - | 3 hr. | 20 | 50% | 2500 ppm |
| Ex.19 | 3-Amino-1,2,4-triazole | - | 3 hr. | 20 | 50% | 2500 ppm |
| Ex.20 | p-Phenylenediamine/ m-phenylenediamine | 3/7 | 24 hr | 20 | 50% | 330 ppm |
| Ex.21 | p-Phenylenediamine/ m-phenylenediamine | 3/7 | 48 hr. | 20 | 50% | 330 ppm |
| Ex.22 | p-Phenylenediamine/ m-phenylenediamine | 0/10 | 48 hr. | 20 | 50% | 330 ppm |
| Ex.23 | p-Phenylenediamine/ m-phenylenediamine | 2/8 | 48 hr. | 20 | 50% | 330 ppm |
| Ex.24 | p-Phenylenediamine/ m-phenylenediamine | 3/7 | 24 hr. | 20 | 50% | 330 ppm |
| Ex.25 | p-Phenylenediamine/ m-phenylenediamine | 3/7 | 8 hr. | 80 | 50% | 330 ppm |
| Ex.26 | p-Phenylenediamine/ m-phenylenediamine | 3/7 | 24 hr. | 20 | 50% | 330 ppm |
| C.Ex.3 | - | - | - | - | - | - |
| C.Ex.4 | Aminoguanidine hydrogen carbonate | - | 3 hr. | 20 | 10% | 2500 ppm |
| C.Ex.5 | p-Phenylenediamine/ m-phenylenediamine | 3/7 | 24 hr | 20 | 10% | 330 ppm |
| C.Ex.6 | p-Phenylenediamine/ m-phenylenediamine | 3/7 | 60 sec. | 20 | 50% | 330 ppm |
| C.Ex.7 | p-Phenylenediamine/ m-phenylenediamine | 3/7 | 60 sec. | 20 | 50% | 8% |
| C.Ex.8 | p-Phenylenediamine/ m-phenylenediamine | 10/0 | 48 hr. | 20 | 50% | 330 ppm |
| C.Ex.9 | p-Phenylenediamine/ m-phenylenediamine | 7/3 | 48 hr. | 20 | 50% | 330 ppm |

(Example 27)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. After that, the filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The wound filament had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. Spinning oil was applied to the resultant filaments, which were doubled to form a tow having a fineness of 30,000 denier. The tow was crimped with a push-on crimper having rolls with widths of 20 mm. The crimped tow was cut with a rotary cutter, into staple fibers with given lengths of 44 mm. The staple fibers thus obtained had a strength retention of 90% after the storage test under an atmosphere of high temperature and high humidity.

(Comparative Example 10)

The procedure up to the step of washing a polybenzazole filament with water until the concentration of the residual phosphorus reached 5,000 ppm or less and winding the same onto a paper cylinder without drying was repeated in the same manner as in Example 27.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3.300 ppm. The molar ratio of Na/P was 0.95. Spinning oil was applied to the resultant filaments, which were doubled to form a tow having a fineness of 30,000 denier. The tow was crimped with a push-on crimper having rolls with widths of 20 mm. The crimped tow was cut with a rotary cutter, into staple fibers with given lengths of 44 mm. The staple fibers thus obtained had a strength retention of 82% after the storage test under an atmosphere of high temperature and high humidity.

(Comparative Example 11)

The procedure up to the step of washing a polybenzazole filament with water until the concentration of the residual phosphorus reached 5,000 ppm or less and winding the same onto a paper cylinder without drying was repeated in the same manner as in Example 27.

The wound filament was neutralized with a 1% aqueous NaOH solution for 10 seconds, and washed with water for 30 seconds, and dried until the moisture regain thereof reached 10%, and again wound onto a porous resinous bobbin. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 3,600 ppm, and that of sodium, 2,200 ppm. The molar ratio of Na/P was 0.82. Spinning oil was applied to the resultant filaments, which were doubled to form a tow having a fineness of 30,000 denier. The tow was crimped with a push-on crimper having rolls with widths of 20 mm. The crimped tow was cut with a rotary cutter, into staple fibers with given lengths of 44 mm. The staple fibers thus obtained had a strength retention of 79% after the storage test under an atmosphere of high temperature and high humidity.

The foregoing results are summarized in Table 4. As is apparent from Table 4, the polybenzazole staple fibers of Example had a very high strength retention after exposed to the atmosphere of high temperature and high humidity, as compared with the staple fibers of Comparative Examples.

<Table 4>

| | Conditions for washing, neutralization and washing | | | Concentration of P | Concentration of Na | Molar ratio of Na/P | Breaking strength | Strength retention | Hws | Er |
|---|---|---|---|---|---|---|---|---|---|---|
| | Neutralization | | Washing time after neutralization | | | | | | | |
| | NaOH concentration | Time | | | | | | | | |
| | | Sec. | Sec. | ppm | ppm | | GPa | % | °/GPa | Gpa |
| Ex.27 | 1% | 10 | 30 | 1900 | 760 | 0.54 | 5.8 | 90 | 0.18 | 21 |
| C.Ex.10 | 1% | 10 | 30 | 4700 | 3300 | 0.95 | 6.0 | 82 | 0.36 | 36 |
| C.Ex.11 | 1% | 10 | 30 | 3600 | 2200 | 0.82 | 5.9 | 79 | 0.39 | 36 |

<Table 4 Continued>

| | Treating conditions | | | | | |
|---|---|---|---|---|---|---|
| | Reagent | Ratio | Time | Temp. °C | Moisture regain before treatment | Concentration of treating liquid |
| Ex.27 | p-Phenylenediamine | 3/7 | 24 hr. | 20 | 50% | 330 ppm |
| C.Ex.10 | - | - | - | - | - | - |
| C.Ex.11 | p-Phenylenediamine | 3/7 | 24 hr | 20 | 10% | 330 ppm |

(Example 28)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The resultant polybenzazole filaments were cut into staple fibers with lengths of 51 mm, which were then twisted at a twist coefficient of 3.5 to make a spun yarn having a cotton yarn count of 20 Ne. The spun yarn thus obtained had a tensile strength of 9.8 cN/dtex, and had a strength retention of 77% after the storage test under an atmosphere of high temperature and high humidity (80°C and 80 RH%).

(Comparative Example 12)

The procedure up to the step of washing a polybenzazole filament with water until the concentration of the residual phosphorus reached 5,000 ppm or less and winding the same onto a paper cylinder without drying was repeated

in the same manner as in Example 28.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The resultant polybenzazole filaments were cut into staple fibers with lengths of 51 mm, which were then twisted at a twist coefficient of 3.5 to make a spun yarn having a cotton yarn count of 20 Ne. The spun yarn thus obtained had a tensile strength of 9.1 cN/dtex, and had a strength retention of 60% after the storage test under an atmosphere of high temperature and high humidity (80°C and 80 RH%).

(Example 29)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The resultant polybenzazole filaments were cut into staple fibers with lengths of 51 mm, which were then twisted at a twist coefficient of 3.5 to make a spun yarn having a cotton yarn count of 20 Ne. Two such spun yarns were twisted to make a two folded yarn having a yarn count of 20/2 Ne. The two folded yarns thus obtained were woven to make a 2/1 twill fabric which was filled with 68 two folded yarns/inch in the vertical direction and filled with 60 two folded yarns/inch in the lateral direction. The tensile strength of the resultant twill fabric in the vertical direction was 4,260 N/3 cm. The twill fabric had a strength retention of 78% after the storage test under an atmosphere of high temperature and high humidity (80°C and 80 RH%).

(Example 30)

The spun yarns having a yarn count of 20/1Ne obtained in Example 29 were knitted to make a round braid which had 68 stitches/inch in the vertical direction and 29 stitches/inch in the lateral direction. The tensile strength of the round braid in the vertical direction was 1,530 N/5 cm. The round braid had a strength retention of 76% after the storage test under an atmosphere of high temperature and high humidity (80°C and 80 RH%).

(Comparative Example 13)

The procedure up to the step of washing a polybenzazole filament with water until the concentration of the residual phosphorus reached 5,000 ppm or less and winding the same onto a paper cylinder without drying was repeated in the same manner as in Example 29.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The resultant polybenzazole filaments were cut into staple fibers with lengths of 51 mm, which were then twisted at a twist coefficient of 3.5 to make a spun yarn having a cotton yarn count of 20/1 Ne. Two such spun yarns were twisted to make a two folded yarn having a yarn count of 20/2 Ne. The two folded yarns thus obtained were woven to make a 2/1 twill fabric which was filled with 68 two folded yarns/inch in the vertical direction and

filled with 60 two folded yarns/inch in the lateral direction. The tensile strength of the resultant twill fabric in the vertical direction was 4,280 N/3 cm. The twill fabric had a strength retention of 59% after the storage test under an atmosphere of high temperature and high humidity (80°C and 80 RH%).

(Comparative Example 14)

The spun yarns having a yarn count of 20/1Ne obtained in Comparative Example 13 were knitted to make a round braid which had 68 stitches/inch in the vertical direction and 29 stitches/inch in the lateral direction. The tensile strength of the round braid in the vertical direction was 1,490 N/5 cm. The round braid had a strength retention of 62% after the storage test under an atmosphere of high temperature and high humidity (80°C and 80 RH%).

(Example 31)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54.

Spinning oil was applied to the resultant filaments, which were then doubled to make a tow having a thickness of 30,000 deniers. The tow was crimped with a push-on crimper having rolls with widths of 20 mm. The crimped tow was cut with a rotary cutter, into staple fibers with lengths of 44 mm, which were then opened with an opener to make a web having a weight of 200 g/m$^2$ with a roller card. A plurality of webs thus obtained were laminated and subjected to needle punching to obtain a felt having a thickness of 9.8 mm and a weight of 2,700 g/m$^2$. The abrasion resistance of the felt under an atmosphere of high temperature was evaluated. As a result, the decrease in the weight of the felt due to abrasion was 3.1 mg/cm$^2$.

(Comparative Example 15)

The procedure up to the step of washing a polybenzazole filament with water until the concentration of the residual phosphorus reached 5,000 ppm or less and winding the same onto a paper cylinder without drying was repeated in the same manner as in Example 31.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95.

The filaments thus obtained were processed in the same manner as in Example 31 to obtain a felt having a thickness of 10.2 mm and a weight of 2,800 g/m$^2$. The abrasion resistance of the felt under an atmosphere of high temperature was evaluated. As a result, the decrease in the weight of the felt due to abrasion was 3.7 mg/cm$^2$.

(Comparative Example 16)

The procedure up to the step of washing a polybenzazole filament with water until the concentration of the residual phosphorus reached 5,000 ppm or less and winding the same onto a paper cylinder without drying was repeated

in the same manner as in Example 31.

The wound filament was neutralized with a 1% aqueous NaOH solution for 10 seconds, and washed with water for 30 seconds, and dried until the moisture regain thereof reached 10%. Then, the filament was wound onto a porous resinous bobbin. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 3,600 ppm, and that of sodium, 2,200 ppm. The molar ratio of Na/P was 0.82.

The filaments thus obtained were processed in the same manner as in Example 31 to obtain a felt having a thickness of 9.9 mm and a weight of 2,700 g/m$^2$. The abrasion resistance of the felt under an atmosphere of high temperature was evaluated. As a result, the decrease in the weight of the felt due to the abrasion was 3.8 mg/cm$^2$.

The foregoing results are summarized in Table 5. As is apparent from Table 5, the felt material made of the polybenzazole filaments of Example had a very high abrasion resistance under the atmosphere of high temperature and high humidity, as compared with the felt materials made of the filaments of Comparative Examples.

<Table 5>

| | Conditions for washing, neutralization and washing | | | Concentration of P | Concentration of Na | Molar ratio of Na/P | Breaking strength | Strength retention | Hws | Er |
|---|---|---|---|---|---|---|---|---|---|---|
| | Neutralization | | Washing time after neutralization | | | | | | | |
| | NaOH concentration | Time | | | | | | | | |
| | | Sec. | Sec. | ppm | ppm | | GPa | % | °/GPa | Gpa |
| Ex.31 | 1% | 10 | 30 | 1900 | 760 | 0.54 | 5.8 | 90 | 0.18 | 21 |
| C.Ex.15 | 1% | 10 | 30 | 4700 | 3300 | 0.95 | 6.0 | 82 | 0.36 | 36 |
| C.Ex.16 | 1% | 10 | 30 | 3600 | 2200 | 0.82 | 5.9 | 79 | 0.39 | 36 |

<Table 5 Continued>

| | Treating conditions | | | | | | |
|---|---|---|---|---|---|---|---|
| | Reagent | Ratio | Time | Temp. | Moisture regain before treatment | Concentration of liquid | Abrasion resistance at high temp. (felt) |
| | | | | °C | | | Decrease in weight |
| Ex.31 | p-Phenylenediamine | 3/7 | 24 hr. | 20 | 50% | 330 | 3.1 mg/cm$^2$ |
| C.Ex.15 | - | - | - | - | - | - | 3.7 mg/cm$^2$ |
| C.Ex.16 | p-Phenylenediamine | 3/7 | 24 hr | 20 | 10% | 330 | 3.8 mg/cm$^2$ |

Since the present invention can provide felt materials made of polybenzazole fibers which can sufficiently maintain the strengths even after exposed to atmospheres of high temperatures and high humidity over long periods of time, the felt materials of the present invention can be effectively used to convey hot products which retain heat of, particularly 300°C or higher, especially 400°C or higher, manufactured in the field of molding metals such as aluminum, iron, copper, etc. and ceramics.

(Example 32)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to

be converged at an appropriate position to form a multifilament, and soldified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

(Comparative Example 17)

The procedure up to the step of washing a polybenzazole filament with water until the concentration of the residual phosphorus reached 5,000 ppm or less and winding the same onto a paper cylinder without drying was repeated in the same manner as in Example 32.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after the storage test under an atmosphere of high temperature and high humidity.

(Example 33)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

Six polybenzazole filaments thus obtained were Z-wise twisted at 32T/10 cm to make a Z twist yarn. Two such Z twist yarns were S-wise twisted at 32T/10 cm to make a crude cord. Then, the crude cord was subjected to a two-stage dipping treatment to make a dip cord. The first dipping treatment was carried out at 240°C, using an aqueous dispersion of an epoxy resin, and the second dipping treatment was carried out at 235°C, using a RFL liquid. The strength of the dip cord was 649 N. This dip cord was excellent in strength retention as high as 81% under an atmosphere of high temperature and high humidity. (Comparative Example 18)

The procedure up to the step of washing a polybenzazole filament until the concentration of the residual phosphorus reached 5,000 ppm or less and winding the same onto a paper cylinder without drying was repeated in the same manner as in Example 33.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after the storage test under an atmosphere of high temperature and high humidity.

Six polybenzazole filaments thus obtained were Z-wise twisted at 32T/10 cm to make a Z twist yarn. Two such Z twist yarns were S-wise twisted at 32T/10 cm to make a crude cord. Then, the crude cord was subjected to a two-stage dipping treatment to make a dip cord. The first dipping treatment was carried out at 240°C, using an aqueous dispersion of an epoxy resin, and the second dipping treatment was carried out at 235°C, using a RFL liquid. The strength of the dip cord was 653 N. This dip cord had a strength retention of 56% under an atmosphere of high temperature and high humidity, which was inferior to that of the dip cord of Example 33.

According to the present invention, it is possible to provide a cord for reinforcing rubber, which is made of twisted polybenzazole filaments having a high strength retention even after exposed to an atmosphere of high temperature and high humidity over a long period of time.

(Example 34)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

Twelve polybenzazole filaments thus obtained were twisted at 20T/1 m to make a doubled twist yarn having a fineness of 3,000 denier. Sixteen doubled twist yarns were braided to make a braid. The braid was impregnated with an epoxy resin and set hard, to thereby provide a rod with a diameter of 2 mm, containing 16% of the resin. The decrease in the strength of the rod under an atmosphere of high temperature and high humidity was measured. As a result, the strength retention of the rod was as high as 87%.

(Comparative Example 19)

The procedure up to the step of washing a polybenzazole filament with water until the concentration of the residual phosphorus reached 5,000 ppm or less and winding the same onto a paper cylinder without drying was repeated in the same manner as in Example 34.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after the storage test of high temperature and high humidity.

Twelve polybenzazole filaments thus obtained were twisted at 20T/1 m to make a doubled twist yarn having a

fineness of 3,000 denier. Sixteen doubled twist yarns were braided to make a braid. The braid was impregnated with an epoxy resin and set hard, to thereby provide a rod with a diameter of 2 mm, containing 16% of the resin. The decrease in the strength of the rod under an atmosphere of high temperature and high humidity was measured. As a result, the strength retention of the rod was 73% which was inferior to that of the rod of Example 34.

According to the present invention, it is possible to provide a polybenzazole fiber rod for reinforcing cement and concrete, which can sufficiently maintain the strength even after exposed to an atmosphere of high temperature and high humidity over a long period of time.

(Example 35)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after subjected to a storage test of high temperature and high humidity.

Twelve polybenzazole filaments thus obtained were twisted at 20T/1 m to make a doubled twist yarn having a fineness of 3,000 denier. The doubled twist yarns were woven with a rapier loom to make a plain weave fabric which was filled with 17 warp yarns/inch and 17 weft yarns/inch. The weight of the fabric was 485 $g/m^2$. The tensile strength of the fabric in the warp direction was 620 kg/cm. The decrease in the strength of the fabric under an atmosphere of high temperature and high humidity was measured. As a result, the strength retention was as high as 82%.

(Comparative Example 20)

The procedure up to the step of washing a polybenzazole filament with water until the concentration of the residual phosphorus reached 5,000 ppm or less and winding the same onto a paper cylinder without drying was repeated in the same manner as in Example 35.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after subjected to the storage test under an atmosphere of high temperature and high humidity.

Twelve polybenzazole filaments thus obtained were twisted at 20T/1 m to make a doubled twist yarn having a fineness of 3,000 denier. The doubled twist yarns were woven with a rapier loom to make a plain weave fabric which was filled with 17 warp yarns/inch and 17 weft yarns/inch. The weight of the fabric was 490 $g/m^2$. The tensile strength of the fabric in the warp direction was 637 kg/cm. The decrease in the strength of the fabric under an atmosphere of high temperature and high humidity was measured. As a result, the strength retention was 65%, which was inferior to that of the fabric of Example 35.

According to the present invention, it is possible to provide a polybenzazole fiber sheet for reinforcing cement and concrete, which can sufficiently maintain the strength even after exposed to an atmosphere of high temperature and high humidity over a long period of time.

(Example 36)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 $\mu$m and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

The resultant filament yarns were woven with a rapier loom to make a plain weave fabric which was filled with 60 warp yarns/25 mm and 60 weft yarns/25 mm. The weight of the fabric was 138 g/m$^2$. The tensile strength of the fabric in the warp direction was 2,660 N/3 cm. The decrease in the strength of the fabric under an atmosphere of high temperature and high humidity, and the decrease in strength of the fabric which had been subjected to a light resistance test were measured. As a result, the strength retentions thereof were as high as 82% and 62%, respectively.

(Comparative Example 21)

The procedure up to the step of washing a polybenzazole filament with water until the concentration of the residual phosphorus reached 5,000 ppm or less and winding the same onto a paper cylinder without drying was repeated in the same manner as in Example 36.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after the storage test under an atmosphere of high temperature and high humidity.

The resultant filament yarns were woven with a rapier loom to make a plain weave fabric which was filled with 50 warp yarns/25 mm and 50 weft yarns/25 mm. The weight of the fabric was 135 g/m$^2$. The tensile strength of the fabric in the warp direction was 2,760 N/3 cm. The decrease in the strength of the fabric under an atmosphere of high temperature and high humidity, and the decrease in strength of the fabric which had been subjected to a light resistance test were measured. As a result, the strength retentions thereof were 63% and 47%, respectively, which were inferior to those of the fabric of Example 36.

According to the present invention, it is possible to provide a knife proof vest made of the polybenzazole filaments which can sufficiently maintain the strength even after exposed to an atmosphere of high temperature and high humidity over a long period of time, and which also shows high durability, i.e., a high strength retention after exposed to xenon irradiation.

(Example 37)

A polymer dope of polyparaphenylenebenzobisoxazole (14 wt.%) having an intrinsic viscosity of 30 dL/g at 30°C, measured using a methanesulfonic acid solution, in polyphosphoric acid containing 84.3% of phosphorus pentaoxide was extruded through a nozzle having 166 holes with diameters of 0.18 mm at a spinning temperature of 175°C to form filaments. The filaments were dipped in a first washing bath which was so located as to cause the filaments to be converged at an appropriate position to form a multifilament, and solidified. A quench chamber was located in an air gap between the nozzle and the first washing bath, so as to elongate the filaments at a more uniform temperature. The

quench temperature was 60°C. The filaments were washed with water until the concentration of the residual phosphorous in the polybenzazole filaments reached 5,000 ppm or less, and were wound onto a paper cylinder without drying the same. The takeup rate was 200 m/min.; the spinning elongation multiplying factor was 40; and the length of the filament wound was 1,500 m. The filament wound had a fineness of 1.5 dpf (denier/filament) as a monofilament, and a diameter of 11.5 μm and a moisture regain of 50%.

The wound filament was neutralized with a 1% aqueous NaOH solution for 10 seconds, and washed with water for 30 seconds, and wound onto a porous resinous bobbin without drying the same. The moisture regain of the wound filament was 50%. A solution of m-phenylenediamine (2.8 g) and p-phenylenediamine (1.2 g) in water (12 L) was poured into an apparatus shown in Fig. 5, and the wound filament was put in the solution, which was then circulated at an ordinary temperature (20°C) for 24 hours. Then, the solution was replaced with pure water, and the pure water was circulated at an ordinary temperature (20°C) for one hour. After that, the wound filament was removed from the apparatus and dried at 80°C for 4 hours. The circulations of the liquids were carried out while an air was being supplied into the liquids. The concentrations of the residual phosphorous and sodium in the resultant filament were measured. As a result, the concentration of phosphorus was 1,900 ppm, and that of sodium, 760 ppm. The molar ratio of Na/P was 0.54. The filament had a strength retention of 90% after the storage test under an atmosphere of high temperature and high humidity.

Two polybenzazole filaments thus obtained were doubled but not twisted, to make a yarn with a thickness of 555 dtex. The yarns thus obtained were woven with a rapier loom to make a plain weave fabric filled with 30 warp yarns/inch and 30 weft yarns/inch. The weight of the fabric was 135 $g/m^2$. The tensile strength of the fabric in the warp direction was 616 N/3 cm. The decrease in the strength of the fabric under an atmosphere of high temperature and high humidity, and the decrease in the strength of the fabric which had been subjected to a light exposure test were measured. As a result, the strength retentions of the fabric were as high as 82% and as high as 62%, respectively.

(Comparative Example 22)

The procedure up to the step of washing a polybenzazole filament with water until the concentration of the residual phosphorus reached 5,000 ppm or less and winding the same onto a paper cylinder without drying was repeated in the same manner as in Example 37.

The wound filament was neutralized with a 1% aqueous NaOH solution for 10 seconds, and washed with water for 30 seconds, and dried at 80°C for 4 hours. The concentrations of the residual phosphorous and sodium in the resultant filament were measured. As a result, the concentration of phosphorus was 4,700 ppm, and that of sodium, 3,300 ppm. The molar ratio of Na/P was 0.95. The filament had a strength retention of 82% after the storage test under an atmosphere of high temperature and high humidity.

Two polybenzazole filaments thus obtained were doubled but not twisted, to make a yarn with a thickness of 555 dtex. The yarns thus obtained were woven with a rapier loom to make a plain weave fabric filled with 30 warp yarns/inch and 30 weft yarns/inch. The weight of the fabric was 133 $g/m^2$. The tensile strength of the fabric in the warp direction was 5,740 N/3 cm. The decrease in the strength of the fabric under an atmosphere of high temperature and high humidity, and the decrease in the strength of the fabric which had been subjected to a light exposure test were measured. As a result, the strength retentions of the fabric were 63% and 47%, respectively, which were inferior to those of the fabric of Example 37.

According to the present invention, it is possible to provide a bullet proof vest made of the polybenzazole filaments which can sufficiently maintain the strength even after exposed to an atmosphere of high temperature and high humidity over a long period of time, and which also shows high durability, i.e., a high strength retention after exposed to xenon irradiation.

## INDUSTRIAL APPLICABILITY

Since the compositions, the fibers or filaments and the films according to the present invention, and the products made thereof have high strength retentions even after exposed to atmospheres of high temperatures and high humidity over long periods of time, it is possible to markedly expand the applicable fields therefor, and thus, they contribute much to the industries.

## Claims

1. A polybenzazole composition containing a basic substance, wherein the basic substance is selected from the group consisting of guanidines, triazoles, quinazolines, piperidines, o-phenoxyaniline, pyridines and cyanuric acids.

2. A polybenzazole fiber comprising a polybenzazole composition according to claim 1.

**3.** A polybenzazole film, comprising a polybenzazole composition according to claim 1.

**4.** A polybenzazole fiber according to claim 2, which contains a basic organic compound in the form of a monomer or a condensate.

**5.** A polybenzazole fiber according to claim 2, which contains a basic organic compound selected from the group consisting of p-phenylenediamine, m-phenylenediamine and a mixture thereof in the form of a monomer or a condensate.

**6.** A polybenzazole fiber according to claim 2, wherein the X-ray meridian diffraction half-width factor is 0.3°/GPa or less.

**7.** A polybenzazole fiber according to claim 2, wherein the elasticity decrement Er attributed to change of molecular orientation is 30 GPa or less.

**8.** A polybenazole fiber according to claim 2, wherein the breaking strength of the fiber is 1 GPa or more.

**9.** A polybenzazole fiber according to claim 2, which is a staple fiber.

**10.** A polybenzazole spun yarn comprising a polybenzazole fiber according to claim 2.

**11.** A polybenzazole woven or knitted fabric comprising a polybenzazole fiber according to claim 2.

**12.** A polybenzazole felt material comprising a polybenzazole fiber according to claim 2 according to claim 2.

**13.** A polybenzazole composite material comprising a polybenzazole fiber according to claim 2.

**14.** A polybenzazole cord comprising a polybenzazole fiber according to claim 2.

**15.** A polybenazole rod comprising a polybenzazole fiber according to claim 2.

**16.** A polybenzazole fibrous sheet for reinforcing cement and concrete, said sheet comprising a polybenzazole fiber according to claim 2.

**17.** A polybenzazole fibrous sheet for reinforcing cement and concrete, wherein the braking strength of said sheet is 50 kg / cm or more.

**18.** A high strength fiber comprising a polybenzazole fiber according to claim 2.

**19.** A knife-proof vest comprising a polybenzazole fiber according to claim 2.

**20.** A bullet-proof vest comprising a polybenzazole fiber according to claim 2.

**Patentansprüche**

**1.** Polybenzazol-Zusammensetzung, die eine basische Substanz enthält, wobei die basische Substanz aus der Gruppe ausgewählt ist, die aus Guanidinen, Triazolen, Chinazolinen, Piperidinen, o-Phenoxyanilin, Pyridinen und Cyanursäuren besteht.

**2.** Polybenzazol-Faser, die eine Polybenzazol-Zusammensetzung nach Anspruch 1 umfasst.

**3.** Polybenzazol-Folie, die eine Polybenzazol-Zusammensetzung nach Anspruch 1 umfasst.

**4.** Polybenzazol-Faser nach Anspruch 2, die eine basische organische Verbindung in Form eines Monomers oder eines Kondensats enthält.

**5.** Polybenzazol-Faser nach Anspruch 2, die eine basische organische Verbindung, ausgewählt aus der Gruppe bestehend aus p-Phenylendiamin, m-Phenylendiamin und einem Gemisch derselben, in Form eines Monomers oder

eines Kondensats enthält.

6. Polybenzazol-Faser nach Anspruch 2, wobei der Faktor der meridionalen Röntgenbeugungs-Halbwertsbreite 0,3°/GPa oder weniger ist.

7. Polybenzazol-Faser nach Anspruch 2, wobei die Elastizitätsabnahme Er, die auf eine Änderung der molekularen Orientierung zurückzuführen ist, 30 GPa oder weniger ist.

8. Polybenzazol-Faser nach Anspruch 2, wobei die Reißfestigkeit der Faser 1 GPa oder größer ist.

9. Polybenzazol-Faser nach Anspruch 2, die eine Stapelfaser ist.

10. Polybenzazol-Fasergarn, das eine Polybenzazol-Faser nach Anspruch 2 umfasst.

11. Polybenzazol-Gewebe oder -Gewirk, das eine Polybenzazol-Faser nach Anspruch 2 umfasst.

12. Polybenzazol-Filzmaterial, das eine Polybenzazol-Faser nach Anspruch 2 umfasst.

13. Polybenzazol-Verbundmaterial, das eine Polybenzazol-Faser nach Anspruch 2 umfasst.

14. Polybenzazol-Kord, der eine Polybenzazol-Faser nach Anspruch 2 umfasst.

15. Polybenzazol-Stab, der eine Polybenzazol-Faser nach Anspruch 2 umfasst.

16. Polybenzazol-Faserfolie zum Verstärken von Zement und Beton, wobei die Folie eine Polybenzazol-Faser nach Anspruch 2 umfasst.

17. Polybenzazol-Faserfolie zum Verstärken von Zement und Beton, wobei die Reißfestigkeit der Folie 50 kg/cm oder mehr ist.

18. Hochfeste Faser, die eine Polybenzazol-Faser nach Anspruch 2 umfasst.

19. Messerschnittfeste Weste, die eine Polybenzazol-Faser nach Anspruch 2 umfasst.

20. Kugelfeste Weste, die eine Polybenzazol-Faser nach Anspruch 2 umfasst.

## Revendications

1. Composition de polybenzazole contenant une substance basique, dans laquelle la substance basique est choisie dans le groupe constitué de guanidines, triazoles, quinazolines, pipéridines, o-phénoxyaniline, pyridines et d'acides cyanuriques.

2. Fibre de polybenzazole comprenant une composition de polybenzazole selon la revendication 1.

3. Film de polybenzazole comprenant une composition de polybenzazole selon la revendication 1.

4. Fibre de polybenzazole selon la revendication 2, contenant un composé organique basique sous la forme d'un monomère ou d'un condensat.

5. Fibre de polybenzazole selon la revendication 2, contenant un composé organique basique choisi dans le groupe constitué de la p-phénylènediamine, la m-phénylènediamine et d'un mélange de celles-ci sous la forme d'un monomère ou d'un condensat.

6. Fibre de polybenzazole selon la revendication 2, dans laquelle le facteur de la demi-largeur de diffraction des rayons X le long du méridien est inférieur ou égal à 0,3°/GPa.

7. Fibre de polybenzazole selon la revendication 2, dans laquelle le décrément d'élasticité Er attribué au changement

d'orientation moléculaire est inférieur ou égal à 30 GPa.

8. Fibre de polybenzazole selon la revendication 2, dans laquelle la résistance à la rupture de la fibre est supérieure ou égale à 1 GPa.

9. Fibre de polybenzazole selon la revendication 2, qui est une fibre discontinue.

10. Filé en polybenzazole comprenant une fibre de polybenzazole selon la revendication 2.

11. Etoffe tissée ou tricotée en polybenzazole comprenant une fibre de polybenzazole selon la revendication 2.

12. Matière de feutre en polybenzazole comprenant une fibre de polybenzazole selon la revendication 2.

13. Matériau composite en polybenzazole comprenant une fibre de polybenzazole selon la revendication 2.

14. Corde en polybenzazole comprenant une fibre de polybenzazole selon la revendication 2.

15. Tige en polybenzazole comprenant une fibre de polybenzazole selon la revendication 2.

16. Feuille fibreuse en polybenzazole pour renforcer un ciment et un béton, ladite feuille comprenant une fibre de polybenzazole selon la revendication 2.

17. Feuille fibreuse en polybenzazole pour renforcer un ciment et un béton, dans laquelle la résistance à la rupture de ladite feuille est supérieure ou égale à 50 kg/cm.

18. Fibre hautement résistante comprenant une fibre de polybenzazole selon la revendication 2.

19. Gilet résistant aux objets tranchants comprenant une fibre de polybenzazole selon la revendication 2.

20. Gilet pare-balles comprenant une fibre de polybenzazole selon la revendication 2.

Fig. 1

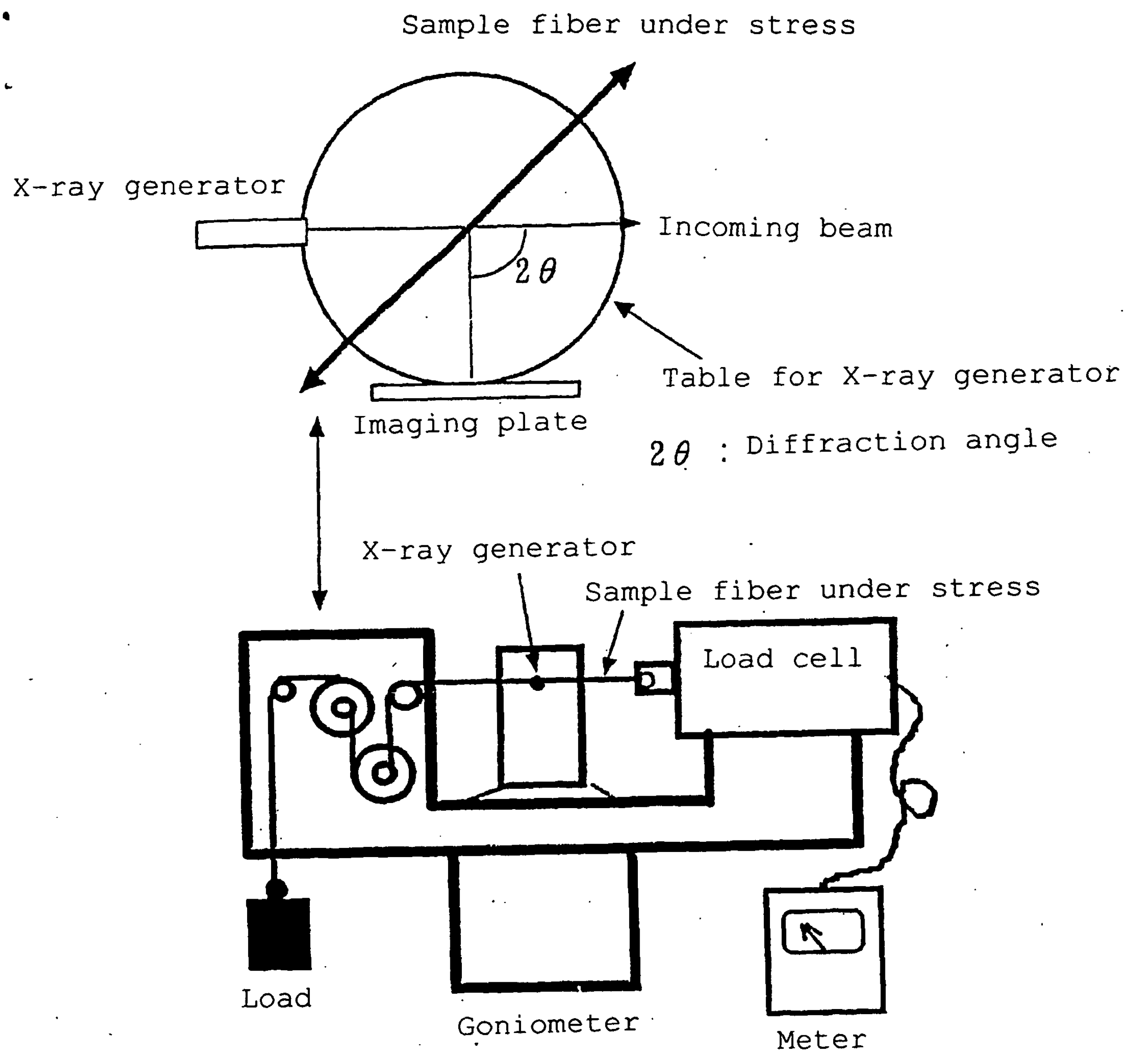
Sample fiber under stress
X-ray generator
Incoming beam
2θ
Table for X-ray generator
Imaging plate
2θ : Diffraction angle
X-ray generator
Sample fiber under stress
Load cell
Load
Goniometer
Meter

Fig. 2

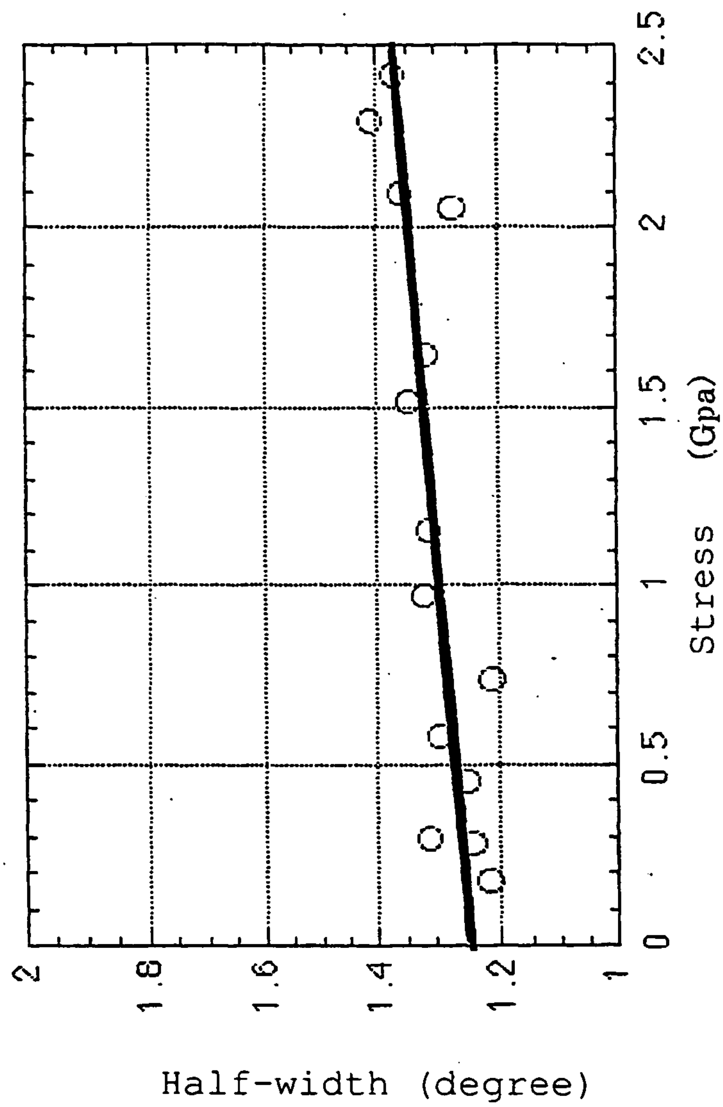

Fig. 3

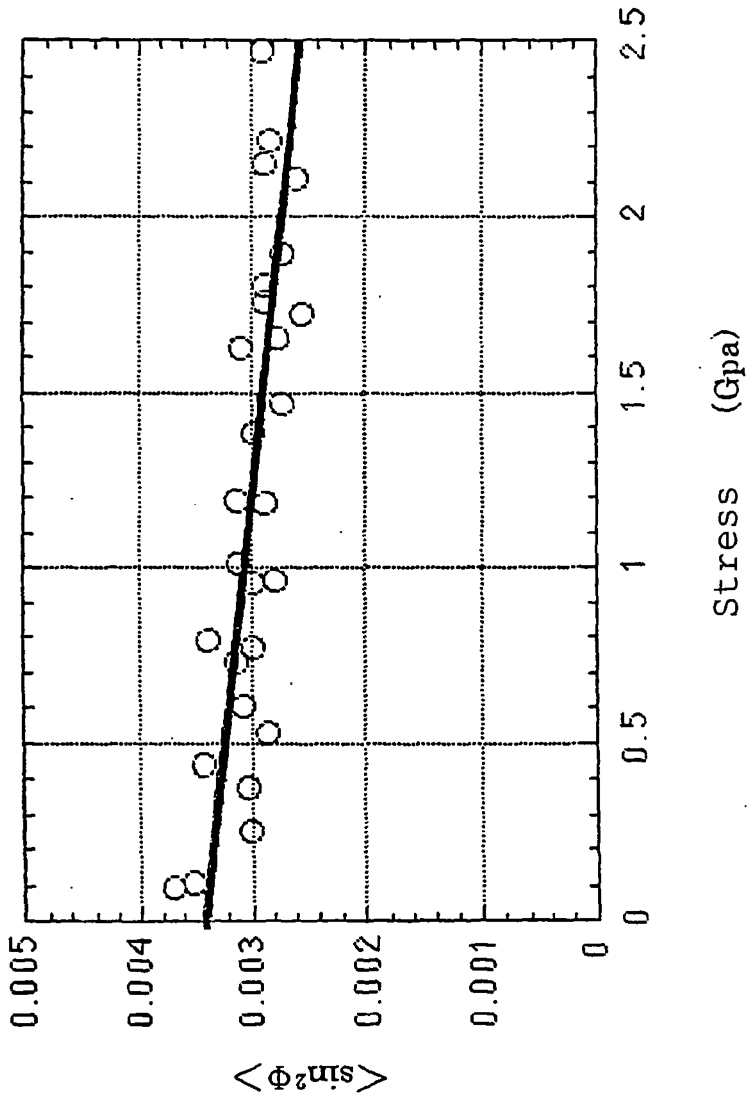

Fig. 4

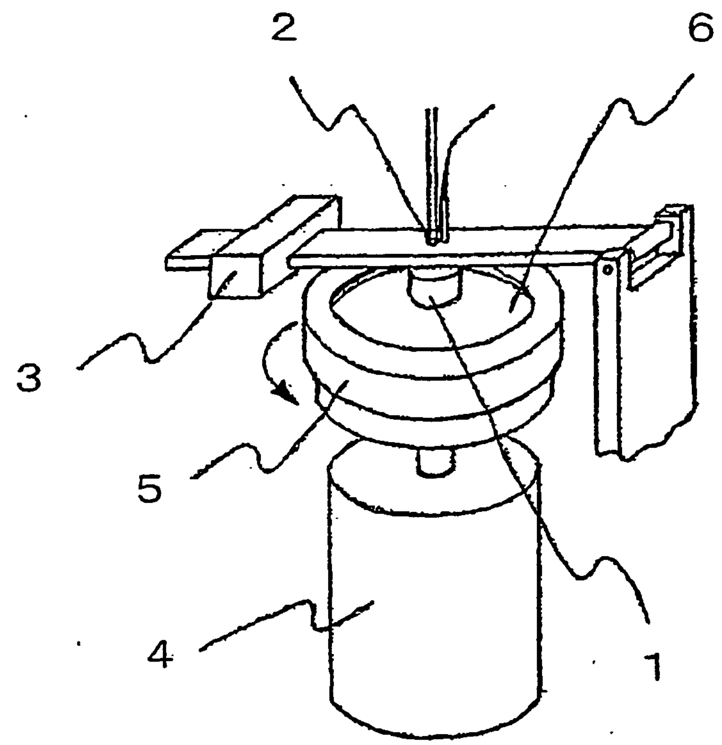

Fig. 5